(19) Europäisches Patentamt
European Patent Office
Office européen des brevets

(11) EP 1 637 765 B1

(12) EUROPEAN PATENT SPECIFICATION

(45) Date of publication and mention of the grant of the patent:
**12.11.2008 Bulletin 2008/46**

(51) Int Cl.:
***F16F 15/00*** *(2006.01)*

(21) Application number: **05019470.3**

(22) Date of filing: **07.09.2005**

# (54) Optimum location of active vibration controller

Optimaler Standort einer aktiven Schwingungsdämpfungssteuerungseinheit

Emplacement optimum pour un contrôleur de vibrations actif

(84) Designated Contracting States:
**DE FR GB**

(30) Priority: **21.09.2004 JP 2004273673**
**01.12.2004 JP 2004348815**

(43) Date of publication of application:
**22.03.2006 Bulletin 2006/12**

(73) Proprietor: **NISSAN MOTOR CO., LTD.**
**Yokohama-shi**
**Kanagawa-ken (JP)**

(72) Inventors:
- **Mensler, Michel**
  **Yokosuka-shi,**
  **Kanagawa-ken (JP)**
- **Nishira, Hikaru**
  **Yokohama-shi,**
  **Kanagawa-ken (JP)**
- **Kawabe, Taketoshi**
  **Fukuoka-shi,**
  **Fukuoka-ken (JP)**
- **Yashiro, Haruki**
  **Yokohama-shi,**
  **Kanagawa-ken (JP)**

(74) Representative: **Grünecker, Kinkeldey,**
**Stockmair & Schwanhäusser**
**Anwaltssozietät**
**Leopoldstraße 4**
**80802 München (DE)**

(56) References cited:
**EP-A- 1 329 963**
**DE-B3- 10 307 168**
**US-A- 5 458 222**
**US-A- 6 138 996**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 637 765 B1

Printed by Jouve, 75001 PARIS (FR)

## Description

The present invention relates to an active vibration controller **according to the preamble of independent claim 1**. **Such an active vibration controller having a sensor and actuator arranged on a floor panel of a vehicle body can be taken from the prior art document** US 6,138,996**. Said actuator is arranged on a plate shaped element of the floor panel of a vehicle body adjacent to a rigid part of floor panel of a vehicle body.**

There are vibration controllers for suppressing noise that is caused by vibration of a body panel of a vehicle and is emitted into a cabin of the vehicle. The vibration controller according to the related art has a vibration detector for detecting vibration of a body panel of a vehicle that may cause noise in a cabin of the vehicle, a vibrator directly or indirectly attached to the body panel, for vibrating the body panel, and a control unit for making, according to the detected vibration, the vibrator vibrate to cancel the detected vibration.

The related art simply states that several sensors serving as vibration detectors are arranged at vibration detecting locations on a roof panel, and that the sensors may be attached not only to the roof panel but also to a floor panel of the vehicle. Namely, the related art describes nothing about the details of locations where the vibration detectors and vibrators must be arranged.

Accordingly, depending on locations in a vehicle where the sensors are arranged, the related art must increase the number of sensors, to increase the cost. **It is an objective of the present invention to provide an active vibration controller as indicated above, wherein a high operation** performance can be achieved.

According to the present invention, said objective is solved by an active vibration controller having the features of independent claim 1. Preferred embodiments are laid down in the dependent claims.

Accordingly, it is provided an active vibration controller having a sensor to measure a physical quantity related to the vibration of the body of a vehicle, an actuator arranged on a floor panel of the vehicle body, and a control unit to control the actuator according to the measured physical quantity in such a way as to reduce noise caused by the vibration of the vehicle body. The actuator deforms itself to distort the floor panel. The actuator is installed on a member of the floor panel whose rigidity is greater than an average rigidity of the entire floor panel.

**Hereinafter, the present invention is illustrated and explained in detail by means of preferred embodiments in conjunction with the accompanying drawings. In the drawings wherein:**

Figure 1 is a block diagram showing an adaptive filter controller installed on a vehicle, the adaptive filter controller being an example of an active vibration controller according to an embodiment of the present **teaching** ;
Fig. 2 is a block diagram showing signals transmitted and received in the adaptive filter controller of Fig. 1;
Fig. 3A is a sectional view showing a vehicle on which the vibration controller of Fig. 1 is installed;
Fig. 3B is a plan view showing a floor panel of the vehicle of Fig. 3A;
Fig. 4 is a plan view showing members arranged on the floor panel of Fig. 3B;
Fig. 5 is a model explaining operation of a piezoelectric actuator which is an example of the actuator of Fig. 1;
Fig. 6A is a model showing distortion on the floor panel produced by the actuator attached thereto;
Fig. 6B is a graph showing the magnitude of a stress F transmitted from the actuator to the floor panel;
Fig. 6C is a graph showing the magnitude of vibration propagated through the floor panel;
Fig. 7 is a plan view showing a distribution of signal attenuation rates $\alpha$ when a stress is directly applied to the right side of a cabin panel;
Fig. 8 is a plan view showing a distribution of signal attenuation rates $\alpha$ when a stress is applied to a member arranged on the right side of the cabin panel;
Fig. 9 is a plan view showing a distribution of signal attenuation rates $\alpha$ when a stress is directly applied to the left side of the cabin panel;
Fig. 10 is a plan view showing a distribution of signal attenuation rates $\alpha$ when a stress is applied to a member arranged on the left side of the cabin panel;
Fig. 11 is a plan view showing a distribution of signal attenuation rates $\alpha$ when a stress is directly applied to the center of a tank panel;
Fig. 12 is a plan view showing a distribution of signal attenuation rates $\alpha$ when a stress is applied to a member arranged on the right side of the tank panel;
Fig. 13A is a graph showing an example of a vibration mode propagated along a longitudinal member;
Fig. 13B is a graph showing an optimum location to arrange an actuator when there are a plurality of vibration modes;
Fig. 14A is a view briefly explaining vibration modes on a member;
Fig. 14B is a graph showing the vibration mode of Fig. 14A;
Fig. 14C is a model showing vibration modes in various directions (x-axis and $\gamma$-axis directions) on a member and on a floor panel;
Fig. 14D is an enlarged view showing a part of the member of Fig. 14C;
Fig. 15 is an overlapped view showing a 20-dB boundary of Fig. 10 with an actuator arranged on a left-front member and a 20-dB boundary of Fig. 12 with an actuator arranged on a right-rear member;
Fig. 16 is a model showing the orientation of an actuator arranged on a member;
Fig. 17 is a perspective view showing the shape of a standard actuator;
Fig. 18A is a perspective view showing the magnitude of a deforming moment MW acting in a lateral direction;
Fig. 18B is a perspective view showing the magnitude of a deforming moment ML acting in a longitudinal direction;
Fig. 19A is a plan view showing vibration measuring points on a floor panel in a test
Fig. 19B is an enlarged view of a right upper part of Fig. 19A, showing an actuator arranged on and in parallel with a member and a distribution of signal attenuation rates;
Fig. 20A is a plan view showing vibration measuring points on a floor panel in a test ;
Fig. 20B is an enlarged view of a right upper part of Fig. 20A, showing an actuator orthogonally arranged on a member and a distribution of signal attenuation rates;
Fig. 21 is a plan view showing the number of necessary actuators and a distribution of signal attenuation rates when the actuators are arranged to produce a maximum moment in parallel with the length of a member;
Fig. 22 is a plan view showing the number of necessary actuators and a distribution of signal attenuation rates when the actuators are arranged to produce a maximum moment orthogonal to the length of a member;
Fig. 23A is a sectional view showing an actuator arranged on a member, the actuator being inside a vehicle;
Fig. 23B is a sectional view showing an actuator arranged on a member, the actuator being outside a vehicle;
Fig. 24A is a sectional view showing an arrangement of transfer members with an actuator arranged inside a vehicle;
Fig. 24B is a sectional view showing an arrangement of transfer members with an actuator arranged outside a vehicle;
Fig. 25 is a plan view showing an X-Y distribution of vibration propagated through a floor panel;
Fig. 26 is a plan view showing a relationship between the orientation of an actuator and a steepest gradient direction of deformation along a valley; and
Fig. 27 is a perspective view showing a relationship between bending moment and bending strength with an actuator of complicated shape arranged on a material.

Embodiments of the present **teaching** will be explained with reference to the drawings. Through the drawings, the same or similar parts are represented with the same or similar reference marks.

Figure 1 shows an active vibration controller according to an embodiment of the present **teaching**. In the active vibration controller, an acceleration sensor 1 serves as a means for detecting vibration transmitted through a body 5 of a vehicle. The acceleration sensor 1 measures a physical quantity related to vibration of the body 5. According to the measured physical quantity, an actuator 3 is deformed to distort a floor panel 6 of the body 5. The actuator 3 continuously deforms the floor panel 6, so that controlling vibration is propagated through the body 5. The controlling vibration interferes with vibration and noise propagated from the outside of the body 5 to the inside of the cabin of the vehicle, thereby canceling the vibration and noise in the cabin. A microphone 2 monitors a noise level in the cabin.

The active vibration controller has a control unit 4 that controls the actuator 3 according to the physical quantity measured by the acceleration sensor 1 in such a way as to reduce noise caused by vibration of the body 5. There are known control units that actively reduce vibration and noise by making controlling vibration interfere with the vibration and noise. This embodiment employs, as the control unit 4, an adaptive filter controller including an adaptive filter 7 for transmitting a control signal to the actuator 3 and an adaptive law 8 for updating filter parameters on-line according to a signal representative of noise in the cabin.

The adaptive filter controller needs two kinds of signals measured by two kinds of sensors (1, 2). One of the signals relates to disturbance that causes noise transmitted to the cabin. This signal is, for example, a signal from the acceleration sensor (G-sensor) 1 that measures vibration transmitted from a road surface 11 to wheels (tires 10a and 10b). The other is a signal related to a noise level in the cabin. This signal is, for example, a signal from the microphone 2 installed in the cabin. In this way, the active vibration controller employing the adaptive filter 7 needs two kinds of sensors, i.e., the sensor (acceleration sensor 1) for measuring disturbance and the sensor (microphone 2) for measuring noise in the cabin. The noise in the cabin is a result of interference between vibration or noise caused by the disturbance and controlling vibration produced by the actuator 3.

The sensor for measuring disturbance may be a positional sensor that measures a vertical positional change of one or more wheels relative to a road surface, or an acceleration sensor that measures acceleration in a vertical direction. The acceleration sensor 1 of this embodiment is fixed in the vicinity of a wheel. The sensor for measuring a noise level in the cabin may be one or more microphones that measure a sound pressure in the cabin. Instead of the microphone 2, an acceleration sensor for measuring noise in the cabin or vibration on the floor, dashboard, ceiling (roof panel), and the like may be employed. Any vibration controller such as the active vibration controller employing the adaptive filter needs one or more actuators.

The actuator 3 is fixed under the floor panel 6 of the body 5 and is configured to deform itself to thereby deform the floor panel 6. The deformation of the floor panel 6 produces controlling vibration on the body 5, to cancel vibration and noise caused by disturbance. The actuator 3 may be a piezoelectric actuator that uses a piezoelectric effect of causing deformation in proportion to an electric field applied to crystals. When an electric field is applied to each face of the actuator 3, the actuator 3 deforms.

In Fig. 2, the adaptive filter 7 receives a signal representative of disturbance X. The disturbance X is also received by a system 9. The system 9 is a superior concept containing the body 5 of Fig. 1. The signal representative of the disturbance X is a reference signal and is transferred from, for example, the acceleration sensor 1 of Fig. 1. In response to the reference signal x(n) representative of the disturbance X, the adaptive filter 7 generates a response signal y(n) and supplies it to the actuator 3. The response signal y(n) is expressed as follows:

$$y(n) = \sum_{i=0}^{I-1} W_i\, x(n-i) \qquad (1)$$

where Wi is an "i"th parameter among "I" parameters of the adaptive filter 7.

For the reference signal x(n), the actuator 3 provides a response signal r(n) as follows:

$$r(n) = \sum_{j=0}^{J-1} C'_j\, x(n-j) \qquad (2)$$

where Cj' is a "j"th parameter among "J" parameters of an estimated transfer function between the panel of the body 5 and the microphone 2.

The adaptive law 8 obtains a parameter W of the adaptive filter 7 as follows:

$$W_i(n+1) = W_i(n) - \alpha\left\{\sum_{i=1}^{L} e(n)r(n-i) + \beta\, y(n)x(n-i)\right\} \qquad (3)$$

where $\alpha$ and $\beta$ are design parameters set by a user, such as $\alpha = 0.1$ and $\beta = 1$. A signal e(n) is a signal transferred from the microphone 2. Generally, the number J of parameters is at least as follows:

$$J = e^2 + \beta\, y^2 \qquad (4)$$

In Figs. 3A and 3B, the actuator 3 of Fig. 1 is fixed to the floor panel 6 of the body 5. The floor panel 6 is divided into three main parts, i.e., a flat cabin panel 15 positioned under a driver's seat, a tank panel 16 to which a fuel tank is fixed, and a spare tire panel 17 positioned under a spare tire and a trunk. The cabin panel 15 is between an engine room and the tank panel 16. The spare tire panel 17 is between the tank panel 16 and a rear end of the body 5.

In Fig. 4, the floor panel 6 has four longitudinal members 18a to 18d extending in a running direction of the vehicle and four lateral members 19a to 19d extending in a lateral direction. To reduce the weight of the vehicle, the floor panel 6 is made of a thin flat panel, and therefore, has insufficient rigidity. To reinforce the rigidity of the floor panel 6, the bar-like longitudinal members 18a to 18d and lateral members 19a to 19d having higher rigidity than the floor panel 6 are fixed to the floor panel 6. The longitudinal members 18a to 18d and lateral members 19a to 19d are thicker than the floor panel 6. The longitudinal members 18a to 18d and lateral members 19a to 19d may be fixed to one face (top or bottom face) of the floor panel 6, or to each face thereof.

Optimum locations of the actuators 3 and the number of the actuators 3 will be explained. The actuator 3 has a function of deforming the floor panel 6, thereby vibrating the body 5. The actuator 3 must efficiently function. For this, the actuator 3 must be properly positioned. A location where the actuator 3 is positioned must be suitable for efficiently transmitting deformation of the floor panel 6 as far as possible. If the actuator 3 is arranged at a location that is unable to efficiently transmit distortion of the floor panel 6 to a far side, the actuator 3 is unable to effectively function. Then, the number of actuators 3 must be increased, or a voltage applied to the actuator 3 must be increased, to increase the cost or power consumption of the active vibration controller.

Figure 5 shows a piezoelectric actuator serving as the actuator 3. The piezoelectric actuator deforms in a vertical direction relative to the top and bottom faces thereof in response to a voltage (V) applied to the top and bottom faces. At this time, the piezoelectric actuator produces a stress F(N). The piezoelectric actuator is strongly fixed to the floor panel 6 with a special adhesive. As shown in Figs. 6A and 6B, the stress F produced by the piezoelectric actuator deforms (distorts) the floor panel 6. By continuously changing the direction and magnitude of the voltage applied to the piezoelectric actuator, the floor panel 6 vibrates. The vibration of the floor panel 6 generated by the actuator 3 spreads around the part to which the stress F is applied (the position where the actuator 3 is arranged). In Fig. 6C, the vibration is measured with, for example, the acceleration sensor 1, to identify a propagation range of the vibration of the floor panel 6 caused by the actuator 3. An optimum location of the actuator 3 is a location that provides a maximum propagation (radiation) of vibration and allows the actuator 3 to provide the highest effect. Widening the range of effect of the actuator 3 results in reducing the number of necessary actuators 3.

To find the range of effect of the actuator 3, the following processes are carried out:

1. equally distributing measuring points over the cabin panel 15, tank panel 16, and spare tire panel 17;
2. applying a stress F to one of the measuring points and measuring an acceleration at every measuring point; and
3. finding the range of effect of the actuators 3 according to signal attenuation rates $\alpha$ at the measuring points.

The locations and number of the actuators 3 are determined according to signal attenuation rates $\alpha$ measured over the floor panel 6 and standardized according to the ratio of the magnitude of a stress F applied to the floor panel 6 to the magnitude of acceleration of vibration propagated through the floor panel 6. The signal attenuation rate $\alpha$ (dB) is a function indicative of an attenuation rate of a stress F transmitted through the panel and is expressed as follows:

$$\alpha = 20\log_{10}\left(\frac{G}{\max(G)}\right) \quad (5)$$

where G is the ratio of the magnitude a of acceleration to the magnitude f of stress F and is expressed as follows:

$$G = \frac{a}{f} \quad (6)$$

To compare the signal attenuation rates $\alpha$ at the measuring points with one another, each gain G is divided by a maximum gain, thereby normalizing each signal attenuation rate $\alpha$. Namely, an attenuation rate $\alpha$ of the location where a stress F is applied with the actuator 3 is defined as zero.

**T**ests **have been conducted** by arranging the actuators 3 at various locations on the floor panel 6, applying a stress F to the floor panel 6, and measuring signal attenuation rates $\alpha$ at measuring points on the floor panel 6. Results of the tests with six actuators 3 arranged at different locations will be explained with reference to Figs. 7 to 12 each showing a distribution of signal attenuation rates $\alpha$ over the floor panel 6. A scale of the panel in Figs. 7 to 12 differs from that of Fig. 3B.

Arranging the actuators 3 on the cabin panel 15 of the floor panel 6 will be explained with reference to Figs. 7 to 10. From comparison between Figs. 7 and 8, it is understood that applying a stress F onto the right member 18a of the cabin panel 15 (Fig. 8) shows smaller signal attenuation rates $\alpha$ than applying the stress F directly to the right side of the cabin panel 15 (Fig. 7). Namely, the range of effect of the actuator 3 that is arranged on the right member 18a is larger than that of the actuator 3 that is directly arranged on the right side of the cabin panel 15. In Fig. 7, the signal attenuation rates $\alpha$ are obtained allover the floor panel 6, and in Fig. 8, the signal attenuation rates $\alpha$ are obtained in a part of the floor panel 6 around the location where the stress F is applied. In spite of such an areal difference, Figs. 7 and 8 apparently show a difference in the distribution of signal attenuation rates $\alpha$ between the two cases. There will be two reasons why the difference occurs.

The first reason is because the floor panel 6 is thinner than the member 18a, and therefore, vibration rapidly attenuates after the stress F is directly applied to the floor panel 6. On the other hand, the member 18a made of, for example, stainless steel is thicker than the floor panel 6, and therefore, vibration produced on the member 18a slowly attenuates, to decrease the signal attenuation rate $\alpha$.

The second reason is because vibration caused by the stress F directly applied to the floor panel 6 is mostly blocked or damped by the member 18a. On the other hand, vibration caused by the stress F applied to the member 18a is propagated through the member 18a and is transmitted from the member 18a to the floor panel 6. At this time, the characteristics of the vibration change.

In Figs. 9 and 10, the stress F is directly applied to the left side of the cabin panel 15 (Fig. 9) and is applied to the left member 18b arranged on the cabin panel 15 (Fig. 10). Comparison between the cases of Figs. 9 and 10 provides the same result as that of the comparison between the cases of Figs. 7 and 8.

Next, cases of arranging the actuator 3 on the tank panel 16 will be explained with reference to Figs. 11 and 12. Comparing with the case of directly applying the stress F to the cabin panel 15 (Fig. 7), the case of directly applying the stress F to the tank panel 16 (Fig. 11) provides smaller signal attenuation rates $\alpha$. This may be because the tank panel 16 is more uniform than the cabin panel 15 and because no vibration blocking member is fixed to the tank panel 16.

When the stress F is applied to the member 18c of the tank panel 16 as shown in Fig. 12, the characteristics of attenuation greatly change and the influencing range of the actuator 3 greatly expands. Like the cases of the cabin panel 15, fixing the actuator 3 to the member 18c further reduces the signal attenuation rates $\alpha$ and expands the influencing range of the actuator 3 than directly fixing the actuator 3 to the tank panel 16.

**T**ests **have been carried out** on the spare tire panel 17 like the tests carried out on the cabin panel 15 and tank panel 16 and obtained similar results.

It is understood that the influencing range of the actuator 3 more expands by fixing the actuator 3 to the member 18 whose rigidity is greater than an average rigidity of the entire floor panel 6, than by directly fixing the actuator 3 to the panel 6. It is more effective to arrange the actuator 3 on the longitudinal member 18 than arranging the same on the lateral member 19.

A location on the member 18 where the actuator 3 is arranged will be explained. The location of the actuator 3 on the member 18 is determined according to a vibration mode of the member 18. The vibration mode is calculated according to a transfer function between a location where a stress F is applied and a location where a signal attenuation rate $\alpha$ is measured. Figure 13A shows an example of a vibration mode along the longitudinal member 18. The vibration mode shown in Fig. 13A has alternating node 20 and maximum amplitude point 21. At the node 20, deformation of the member 18 is minimum, and at the maximum amplitude point 21, is maximum. To maximize the effect of the piezoelectric actuator 3, it is preferable to arrange the actuator 3 on the maximum amplitude point 21 of a given vibration mode.

If there are a plurality of vibration modes to control, it is preferable to arrange the actuator 3 in a region that covers the maximum amplitude points 21 of the plurality of vibration modes. In Fig. 13B, there are vibration modes A and B to control. In this case, the actuator 3 is arranged in a region 22 that covers maximum amplitude points 21a and 21b of the vibration modes A and B.

Vibration modes related to the member 18 will be briefly explained. As shown in Fig. 14A, the member 18 can vibrate in various shapes. Namely, the member 18 may vibrate in various waveforms (frequencies) as shown in Fig. 14B. Nodes 25a, 25b, and 25c on a y-axis each correspond to a minimum deformation. Maximum amplitude points 26a and 26b each provide a maximum deformation. In Fig. 14C, the member 18 and floor panel 6 are subjected to various vibration modes that are propagated in various directions (along x- and y-axes). Such various vibration modes occurring on the member 18 and floor panel 6 must be considered when positioning the actuator 3 in the above-mentioned region 22 to efficiently control vibration. As shown in Fig. 14D, the member 18 has a thickness of t2 that is thicker than a thickness t1 of the floor panel 6 shown in Fig. 14C.

The number of actuators 3 to be arranged will be explained. The number of necessary actuators 3 is dependent on locations where the actuators 3 are arranged. Optimizing the locations may reduce the number of actuators 3. The number of actuators 3 is also dependent on an allowed signal attenuation rate $\alpha$, i.e., a signal attenuation rate threshold value $\beta$. The number of necessary actuators 3 is calculated so as to keep a signal attenuation rate $\alpha$ of the entire floor panel 6 below the threshold value $\beta$.

When actually calculating the number of actuators necessary for the test cases mentioned above, it is appropriate to set the threshold value $\beta$ as 20 dB. In Fig. 15, a first actuator is arranged on the left-front member 18b and a second actuator on the right-rear member 18c. In this specification, the directional terms "left," "right," "front," and "rear" are defined based on the running direction of the vehicle in which the active vibration controller of the present **teaching** is installed. In Fig. 15, the 20-dB boundary of Fig. 10 with the stress F applied to the left-front member 18b is overlaid on the 20-dB boundary of Fig. 12 with the stress F applied to the right-rear member 18c. As a result, a signal attenuation rate $\alpha$ of 20 dB (= threshold value $\beta$) or smaller is substantially realized allover the floor panel 6. The same result will be obtained when the first actuator 3 is arranged on the right-front member 18a and the second actuator 3 on the left-rear member 18d.

If the threshold value $\beta$ is decreased, the number of necessary actuators will increase. The number N of required actuators 3 is dependent on the signal attenuation rate threshold value $\beta$, locations where the actuators 3 are arranged, and the vibration attenuation characteristic g of each actuator 3 and is expressed as follows:

$$N = f\left(\beta, locations, g\right) \quad (7)$$

If there are three actuators 3, the first and second actuators may be arranged on the right- and left-front members 18a and 18b, respectively, and the third actuator on the left- or right-rear member 18c or 18d. The number of the actuators 3 may be 4, or any other.

The orientation of the actuator 3 on the member 18 is determined from the location of the actuator 3. The actuator 3 is arranged on the member 18 that is narrow and long. In Fig. 16, the actuator 3 has a rectangular shape with a long side L and a short side W. In this case, the actuator 3 is arranged on the member 18 so that the long side L may extend along the length of the member 18.

The orientation of the actuator 3 on the member 18 will be explained in more detail.

Figure 17 shows a standard actuator 3 that is rectangular with a long side L and a short side W. It is necessary to consider the orientation of the actuator 3 when installing it on a member.

The orientation of the actuator 3 is directly dependent on the location of the actuator 3. The member 18 to which the actuator 3 is fixed has a narrow plan shape, and therefore, the actuator 3 is oriented in the same direction as the member 18. Namely, the long side L of the actuator 3 is aligned with the length of the member 18 as shown in Fig. 16. This orientation enables the actuator 3 to be easily arranged on the member 18 without special jigs. The orientation shown in Fig. 16 of the actuator 3 relative to the member 18 is called a "natural orientation.

An optimum orientation of the actuator 3 having a specific vibration attenuation rate on a given surface sometimes differs from the natural orientation. The optimum orientation of the actuator 3 is determined according to the characteristics of the actuator 3.

Generally, a piezoelectric actuator has a rectangular shape with a long length and a short width. The deforming characteristics of the actuator 3 are dependent on the orientation of the actuator 3. The actuator 3 generates a stress when deformed, and therefore, the deforming characteristics of the actuator 3 are important.

As mentioned above, the actuator 3 deforms when a current of given voltage is passed through the top and bottom surfaces thereof. The deformation of the actuator 3 increases as the voltage applied thereto is increased. As shown in Figs. 18A and 18B, a deformation moment $M_L$ produced by the actuator 3 in a long length direction L is greater than a deformation moment $M_W$ produced thereby in a shorter width direction W. The actuator 3, however, may have a square shape with the same length L and width W.

As mentioned above, vibration of the floor panel 6 having a specific signal attenuation rate $\alpha$ is affected by the deformation and orientation of the actuator 3. **T**ests **have been conducted** to measure vibration on a vehicle by deforming piezoelectric actuators arranged on the members 18 of the vehicle.

Figure 19A shows measuring points on the floor panel 6 to measure vibration propagated through the panel 6. The vibration propagated through the floor panel 6 is generated when the actuator 3 arranged on the member 18a is deformed. Figure 19B shows a distribution of signal attenuation rates in a right-upper part of the floor panel 6 around the member 18a. The length L of the actuator 3 along which a maximum deformation moment occurs is oriented along the length of the member 18a. Namely, the maximum moment 31 of the actuator 3 is produced in parallel with the length of the member 18a, and a minimum moment 32 of the actuator 3 occurs orthogonal to the length of the member 18a. The actuator 3 deforms in response to a signal having a relatively long period. Vibration produced by the actuator 3 is measured by acceleration sensors arranged at the measuring points on the floor panel 6. A gain between an input voltage to the actuator 3 and an acceleration is defined as a reference value related to the orientation of the actuator 3. Accordingly, a signal attenuation rate at any other measuring point will be smaller than zero.

In Fig. 19B, the floor panel 6 is divided into low, middle, and high signal attenuation rate areas. It has been found that the low signal attenuation rate area is wider, i.e., signal attenuation rates further decrease when the length (maximum moment 31) of the actuator 3 is oriented orthogonal to the length of the member 18 than when the length (maximum moment 31) of the actuator 3 is oriented in the length direction of the member 18.

Figure 20B shows a distribution of signal attenuation rates with the actuator 3 arranged orthogonal to the member 18. Arranging the actuator 3 orthogonal to the member 18 widens the low or middle signal attenuation rate area more than arranging the actuator 3 in parallel with the member 18.

As mentioned above, the number of actuators 3 must be small to reduce the cost. A distribution of signal attenuation rates changes depending on the orientation of the actuator 3, and therefore, the number of necessary actuators 3 changes depending on the orientation of each actuator 3.

The number of actuators 3 may be determined in such a way as to cover the floor panel 6 with the low or middle signal attenuation area. When the maximum moment 31 of the actuator 3 is oriented in parallel with the length of the member 18a as shown in Fig. 19B, four actuators 3a to 3d must be arranged in a right quarter area of the floor panel 6 as shown in Fig. 21. When the maximum moment 31 of the actuator 3 is arranged orthogonal to the length of the member 18a as shown in Fig. 20B, two actuators 3a and 3b are sufficient in the right quarter area of the floor panel 6. In this way, the number of necessary actuators 3 is smaller when the maximum moment 31 of each actuator 3 is arranged orthogonal to the length of the member 18. than when the same is arranged in parallel with the length of the member 18.

When the actuator 3 is arranged so that the maximum moment 31 thereof is orthogonal to the length of the member 18, the length of the actuator 3 in the direction of the maximum bending moment (maximum moment 31) may be longer than the width of the member 18a. Figure 23A shows an example of arranging the actuator 3 in the cabin of a vehicle. In this example, the four corners of the actuator 3 are in contact with the floor panel 6 but are not in contact with the member 18. Figure 23B shows an example of arranging the actuator 3 outside the cabin. In this example, the four corners of the actuator 3 are not in contact with the member 18 nor with the floor panel 6. Deforming stress produced by the actuator 3 reaches a maximum at the four corners of the actuator 3, and therefore, the examples shown in Figs. 23A and 23B are unable to entirely transmit the maximum deforming moment produced at the four corners of the actuator 3 to the member 18, thereby deteriorating the efficiency of the actuator 3.

A technique to solve this problem will be explained. If the length of the actuator 3 in a maximum bending moment (maximum moment 31) direction is longer than the width of the member 18, transfer members 33a and 33b are arranged as shown in Figs. 24A and 24B to connect the actuator 3 and member 18 to each other. The transfer members 33a and 33b substantially have the same strength as the member 18. The transfer members 33a and 33b have an L-shaped cross section or a triangular cross section and are arranged along the member 18 and the floor panel 6 or the actuator 3. With the transfer members 33a and 33b, the four corners of the actuator 3 are strongly connected to the member 18. Consequently, the maximum deforming moment (bending moment) produced at the four corners of the actuator 3 is efficiently transferred to the member 18 without a loss.

The embodiments and examples mentioned above have considered the orientation of the actuator 3 that is arranged on the member 18. In some cases, the actuator 3 is unable to arrange it on the member 18 and must be arranged on the floor panel 6. In such a case, the orientation of the actuator 3 must also be considered.

Figure 25 shows two vibration modes on the floor panel 6. There are a location where a maximum amplitude appears and a location where a minimum amplitude appears. Valleys 34 and 35 are each a location of maximum amplitude. At each valley, the floor panel 6 shows a maximum deformation. It is preferable to arrange the actuator 3 at the valley 34 (35) on the floor panel 6. The actuator 3 has a maximum moment direction in which the actuator 3 generates a maximum deforming moment. The actuator 3 must be arranged so that the maximum moment direction thereof is aligned with the steepest gradient of the valley 34 (35). Namely, the actuator 3 must be arranged in the direction of the steepest gradient of deformation of the floor panel 6. In Fig. 25 that shows deformation distributions, the actuator 3 is oriented in the direction of an x-axis.

The gradient G(Dz) of a deformation Dz of the floor panel 6 along a z-axis is a function of x and y. The deformation Dz of the floor panel 6 is defined as follows:

$$D_z = g(x, y) \qquad (8)$$

The gradation G(Dz) of the deformation Dz is defined as follows:

$$G(D_Z) = \begin{bmatrix} \dfrac{\partial D_z}{\partial x} \\ \dfrac{\partial D_z}{\partial y} \end{bmatrix} \quad (9)$$

As explained above, the present **teaching** can employ various kinds of actuators including piezoelectric actuators. When arranging the actuator 3 on a flat material such as the floor panel 6, the orientation of the actuator 3 must be determined according to the vibration characteristics or bending moment of the actuator instead of the dimensions or aspect ratio of the actuator. The principal direction of the actuator 3 is not a length direction of the actuator 3 but is a direction in which the actuator 3 provides a maximum deforming moment.

The principal direction of the actuator 3 in which the actuator demonstrates a maximum bending moment must be aligned with a direction of the floor panel 6 in which the floor panel 6 shows a minimum bending strength. A bending moment Ma of the actuator is expressed as follows:

$$M_a = K_a\left(\frac{\partial^4 w}{\partial x^4} + \frac{\partial^4 w}{\partial y^4}\right) \quad (10)$$

where Ka is the bending strength of the actuator and w is the shape of the actuator.

The actuator must be oriented according to the below-mentioned expression (11). Namely, the actuator must be arranged such that the principal direction of the actuator in which the bending moment Ma of the actuator reaches a maximum agrees with a direction of a material in which the bending strength Km of the material reaches a minimum. Here, the "material" is an object on which the actuator is arranged, such as a floor panel or any other material.

$$\text{Actuator direction } (\max(Ma)) = \text{Material direction } (\min(Km)) \qquad (11)$$

Figure 27 shows an actuator having a complicated shape. To such an actuator, the orientation determining technique mentioned above is also applicable. A material on which the actuator is arranged has different bending strengths (Km1, Km2) in two different directions on the surface of the material. On the other hand, the actuator has two different bending moments (Ma1, Ma2) in two different directions. If Km1 > Km2 and Ma1 > Ma2, the material and actuator are oriented such that the direction of the bending moment Ma1 is aligned with the direction of the bending strength Km2.

As explained above, the embodiments of the present **teaching** optimize a location where the actuator 3 is arranged according to signal attenuation rates $\alpha$, to thereby reduce the number of actuators to be arranged and minimize the cost. The embodiments can efficiently reduce road noise transmitted from a road surface to the cabin of a vehicle in which the apparatus of the present **teaching** is installed, to improve comfort of the driver of the vehicle. The embodiments can reduce the number of necessary actuators 3, to reduce the cost.

When arranging the actuator 3 on the member 18, the direction of the maximum moment 31 of the actuator 3 may be aligned with the length of the member 18. When arranging the actuator 3 on the floor panel 6, the actuator 3 is positioned at the "valley" of a vibration mode of the floor panel 6 and is arranged in a direction in which the steepest gradient of deformation Dz of the floor panel 6 appears. This results in reducing the number of necessary actuators 3 and minimizing signal attenuation rates on the floor panel.

If the shape of the actuator 3 is predetermined as shown in Fig. 17, the actuator 3 may be oriented so that the predetermined shape may generate a maximum bending moment in the length direction of the member 18. If the shape of the actuator is not fixed, it may be designed so that the actuator may generate a maximum bending moment along the member 18.

In this way, the active vibration controller according to the present **teaching** optimizes the arranging location of each actuator, to secure excellent noise reduction performance, minimize the number of actuators, and reduce the cost.

## Claims

**1.** An active vibration controller comprising:

a sensor (1) configured to measure a physical quantity related to vibration of a vehicle body (5) ;
an actuator (3) arranged on a floor panel (6) of the vehicle body (5) having a member (18,19) whose rigidity is greater than an average rigidity of the entire floor panel (6) and configured to deform itself to thereby deform the floor panel (6); and
a control unit (4) configured to control the actuator (3) according to the measured physical quantity in such a way as to reduce noise caused by the vibration of the vehicle body (5), **characterized in that**
the actuator (3) being installed on said member (18,19) of the floor panel (6) whose rigidity is greater than an average rigidity of the entire floor panel (6).

**2.** An active vibration controller according to claim 1,**characterized in that** the actuator (3) is arranged on one of right-front, left-front, right-rear, and left-rear members (18,19) of the floor panel (6), the directional terms "right-front," "left-front," "right-rear," and "left-rear" being defined based on a running direction of the vehicle.

**3.** An active vibration controller of claim 1 or 2, **characterized in that** the actuator (3) is arranged at a location where a vibration mode of the member (18,19) produces a maximum amplitude.

**4.** An active vibration controller of claim 3, **characterized in that** a plural of vibration modes are generated, and the actuator (3) is arranged at a location where one or more vibration modes of the member (18,19) produce maximum amplitudes.

**5.** An active vibration controller of one of claims 1 to 4, **characterized in that** the number of the actuators (3) is determined according to signal attenuation rates of the floor panel (6) that are standardized according to the ratio of the magnitude of a stress applied to the member (18,19) and the magnitude of an acceleration of vibration at the location of the member (18,19) where the stress is applied.

6. An active vibration controller of claim 5, **characterized by** a second actuator (3b) arranged on the floor panel (6) and configured to deform itself to thereby deform the floor panel (6), wherein
the actuator (3a) is arranged on one of the right-front and left-front members (18,19) of the floor panel (6); and
the second actuator (3b) is arranged on one of the left-rear and right-rear members (18,19) of the floor panel (6).

7. An active vibration controller of one of claims 1 to 6, **characterized in that** a direction in which the actuator (3) produces a maximum bending moment is aligned with a direction in which the floor panel (6) shows a minimum bending strength.

8. An active vibration controller of claim 7, **characterized by** a transfer material (33a,33b) having substantially the same strength as the member (18,19), configured to connect the actuator (3) and the member (18,19) to each other, wherein the length of the actuator (3) in the direction, in which the actuator (3) produces a maximum bending moment, is longer than the width of the member (18,19).

**Patentansprüche**

1. Aktive Schwingungssteuereinrichtung, aufweisend:

einen Sensor (1), konfiguriert, um eine physische Größe in Bezug auf die Schwingung eine Fahrzeugkarosserie (5) zu messen;
einen Betätiger (3), angeordnet auf einem Bodenpaneel (6) der Fahrzeugkarosserie (5) mit einem Teil (18, 19), dessen Steifigkeit größer als eine durchschnittliche Steifigkeit des gesamten Bodenpaneels (6) und konfiguriert ist, sich selbst zu verformen, um **dadurch** das Bodenpaneel (6) zu verformen; und eine Steuereinheit (4), konfiguriert, um den Betätiger (3) entsprechend der gemessenen physischen Größe in solch einer Weise zu steuern, um ein Geräusch zu reduzieren, verursacht durch die Schwingung der Fahrzeugkarosserie (5), **dadurch gekennzeichnet, dass**
der Betätiger (3) an dem Teil (18, 19) des Bodenpaneels (6) installiert ist, dessen Steifigkeit größer als eine durchschnittliche Steifigkeit des gesamten Bodenpaneels (6) ist.

2. Aktive Schwingungssteuereinrichtung nach Anspruch 1, **dadurch gekennzeichnet, dass** der Betätiger (3) angeordnet ist auf einem von rechts- vom, links- vom, rechts- hinten oder links- hinten Teil (18, 19) des Bodenpaneels (6), wobei die Richtungsbegriffe "rechts- vom", "links- vorn", "rechts- hinten" oder "links- hinten" auf der Grundlage einer Fahrtrichtung des Fahrzeuges definiert sind.

3. Aktive Schwingungssteuereinrichtung nach Anspruch 1 oder 2, **dadurch gekennzeichnet, dass** der Betätiger (3) an einem Ort angeordnet ist, wo ein Schwingungsmodus des Teils (18, 19) eine maximale Amplitude erzeugt.

4. Aktive Schwingungssteuereinrichtung nach Anspruch 3, **dadurch gekennzeichnet, dass** eine Mehrzahl von Schwingungsmodi erzeugt wird und der Betätiger (3) an einem Ort angeordnet ist, wo einer oder mehrere Schwingungsmodi des Teiles (18, 19) maximale Amplituden erzeugen.

5. Aktive Schwingungssteuereinrichtung nach einem der Ansprüche 1 bis 4, **dadurch gekennzeichnet, dass** die Anzahl der Betätiger (3) entsprechend der Signaldämpfungsgeschwindigkeiten des Bodenpaneels (6) bestimmt wird, die standardisiert sind entsprechend des Verhältnisses der Größe einer Beanspruchung, aufgebracht auf das Teil (18, 19) und der Größe einer Beschleunigung der Schwingung bei der Platzierung des Teils (18, 19), wo die Beanspruchung aufgebracht wird.

6. Aktive Schwingungssteuereinrichtung nach Anspruch 5, **gekennzeichnet durch** einen zweiten Betätiger (3b), angeordnet auf dem Bodenpaneel (6) und konfiguriert, um sich selbst zu verformen, um **dadurch** das Bodenpaneel (6) zu verformen, wobei
der Betätiger (3b) an einem von dem rechts- vom oder links- vom Teilen (18, 19) des Bodenpaneels (6) angeordnet ist; und
der zweite Betätiger (3b) auf einem des links- hinten oder rechts- hinten Teils (18, 19) des Bodenpaneels (6) angeordnet ist.

**7.** Aktive Schwingungssteuereinrichtung nach einem der Ansprüche 1 bis 6, **dadurch gekennzeichnet, dass** eine Richtung, in der der Betätiger (3) ein maximales Biegemoment erzeugt, mit einer Richtung ausgerichtet ist, in der das Bodenpaneel (6) eine minimale Biegefestigkeit zeigt.

**8.** Aktive Schwingungssteuereinrichtung nach Anspruch 7, **gekennzeichnet durch** ein Übertragungsmaterial (33a, 33b) mit im Wesentlichen derselben Festigkeit wie das Teil (18, 19), konfiguriert, um den Betätiger (3) und das Teil (18, 19) miteinander zu verbinden, wobei die Länge des Betätigers (3) in der Richtung, in der der Betätiger (3) ein maximales Biegemoment erzeugt, länger als die Breite des Teils (18, 19) ist.

**Revendications**

**1.** Contrôleur de vibration actif comprenant :

un capteur (1) configuré pour mesurer une quantité physique liée à la vibration d'une carrosserie de véhicule (5) ;
un actionneur (3) disposé sur un panneau de plancher (6) de la carrosserie de véhicule (5), doté d'un élément (18, 19) dont la rigidité est supérieure à une rigidité moyenne du panneau de plancher entier (6) et configuré pour se déformer afin de déformer ainsi ledit panneau de plancher (6) ; et
une unité de commande (4) configurée pour commander l'actionneur (3) selon la quantité physique mesurée, de façon à réduire le bruit provoqué par la vibration de la carrosserie du véhicule (5),

**caractérisé en ce que**
l'actionneur (3) est installé sur ledit élément (18, 19) du panneau de plancher (6) dont la rigidité est supérieure à une rigidité moyenne du panneau de plancher entier (6).

**2.** Contrôleur de vibration actif selon la revendication 1, **caractérisé en ce que** l'actionneur (3) est disposé sur un des éléments avant droit, avant gauche, arrière droit et arrière gauche (18, 19) du panneau de plancher (6), les termes directionnels « avant droit », « avant gauche », « arrière droit », et « arrière gauche » étant définis sur la base de la direction de marche du véhicule.

**3.** Contrôleur de vibration actif selon les revendications 1 ou 2, **caractérisé en ce que** l'actionneur (3) est disposé à un emplacement où un mode de vibration de l'élément (18, 19) produit une amplitude maximale.

**4.** Contrôleur de vibration actif selon la revendication 3, **caractérisé en ce que** plusieurs modes de vibration sont générés, et l'actionneur (3) est disposé à un emplacement où un ou plusieurs modes de vibration de l'élément (18, 19) produisent des amplitudes maximales.

**5.** Contrôleur de vibration actif selon l'une quelconque des revendications 1 à 4, **caractérisé en ce que** le nombre d'actionneurs (3) est déterminé selon les taux d'atténuation du signal du panneau de plancher (6) qui sont standardisés selon le rapport entre l'amplitude d'une contrainte appliquée à l'élément (18, 19) et l'amplitude d'une accélération de vibration à l'emplacement de l'élément (18, 19) à l'endroit où la contrainte est appliquée.

**6.** Contrôleur de vibration actif selon la revendication 5, **caractérisé par** un second actionneur (3b) disposé sur le panneau de plancher (6) et configuré pour se déformer, afin de déformer ainsi le panneau de plancher (6), dans lequel l'actionneur (3a) est disposé sur un des éléments avant droit et avant gauche (18, 19) du panneau de plancher (6) ; et le second actionneur (3b) est disposé sur l'un des éléments arrière gauche et arrière droit (18, 19) du panneau de plancher (6).

**7.** Contrôleur de vibration actif selon l'une quelconque des revendications 1 à 6, **caractérisé en ce qu'**une direction dans laquelle l'actionneur (3) produit un moment de pliage maximum est alignée avec une direction dans laquelle le panneau de plancher (6) présente une force de pliage minimale.

**8.** Contrôleur de vibration actif selon la revendication 7, **caractérisé par** un matériau de transfert (33a, 33b) ayant sensiblement la même force que l'élément (18, 19), configuré pour relier l'actionneur (3) et l'élément (18, 19) l'un à l'autre, dans lequel la longueur de l'actionneur (3) dans la direction dans laquelle l'actionneur (3) produit un moment de pliage maximum, est supérieure à la largeur de l'élément (18, 19).

FIG.1

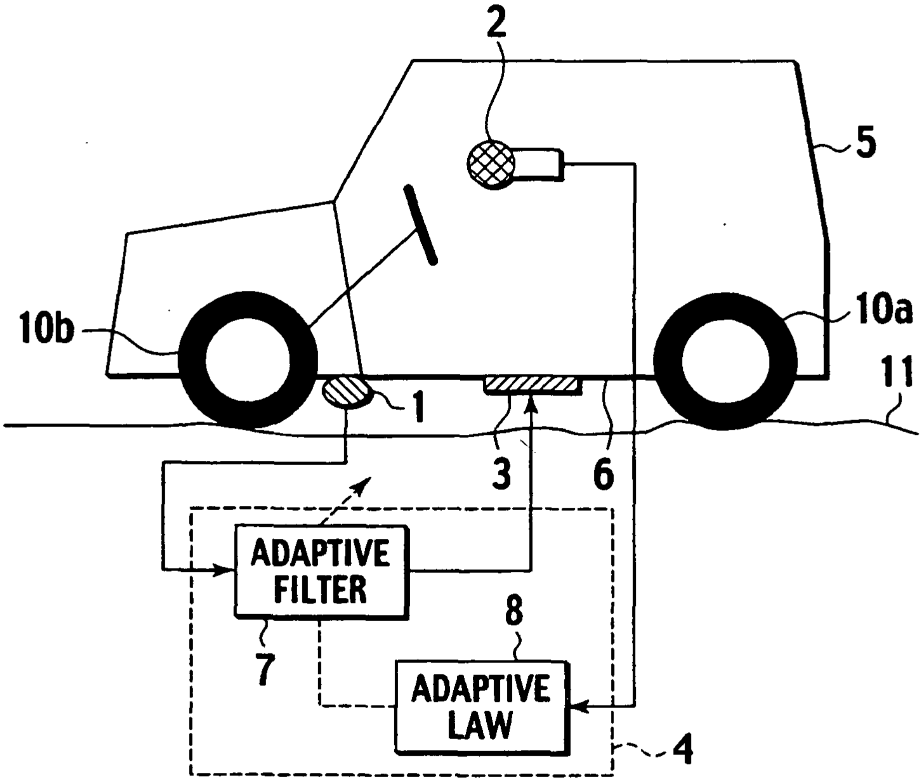
2
5
10b
10a
1
11
3
6
ADAPTIVE FILTER
7
8
ADAPTIVE LAW
4

FIG.2

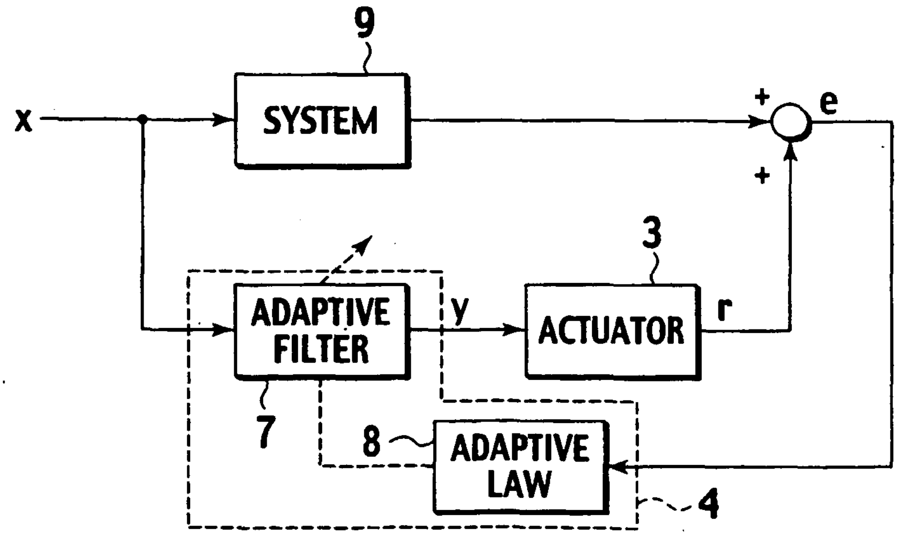
9
x
SYSTEM
+
e
+
3
ADAPTIVE FILTER
y
ACTUATOR
r
7
8
ADAPTIVE LAW
4

FIG.3A

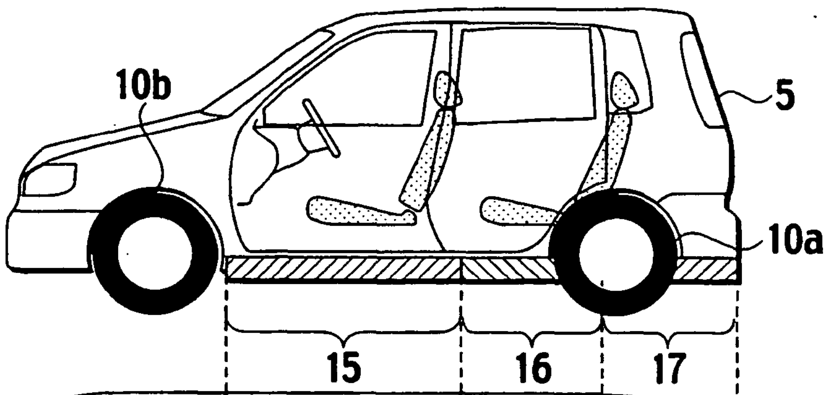


FIG.3B

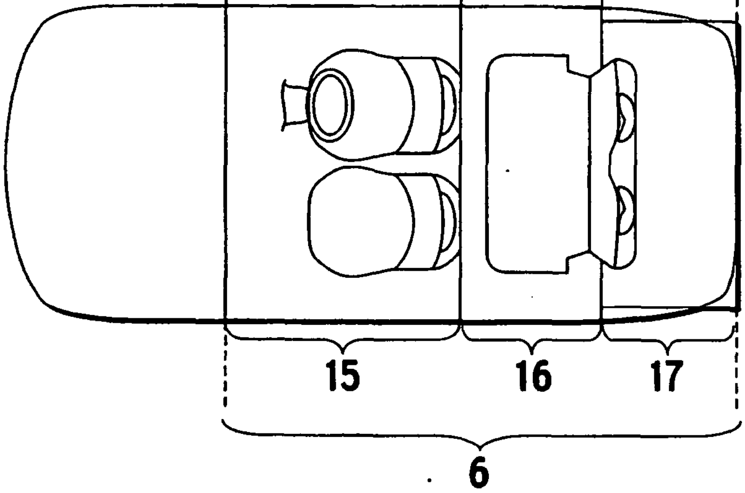


FIG.4

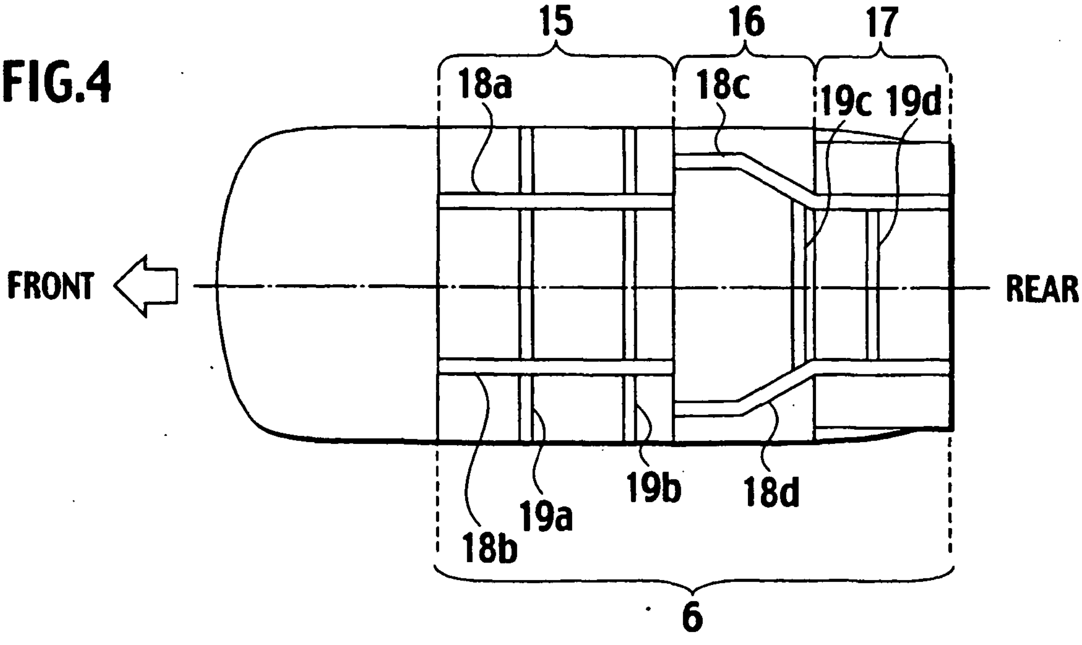

FIG.5

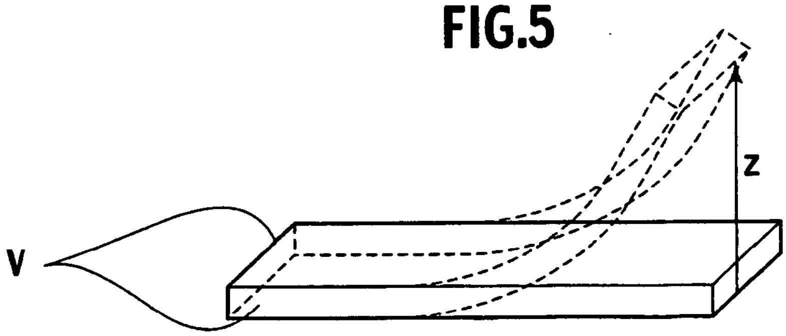


FIG.6A

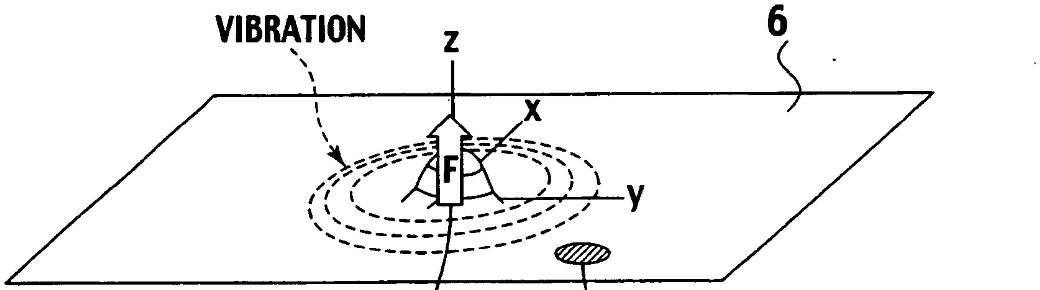


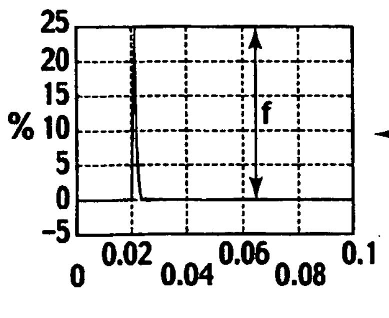


FIG.6B

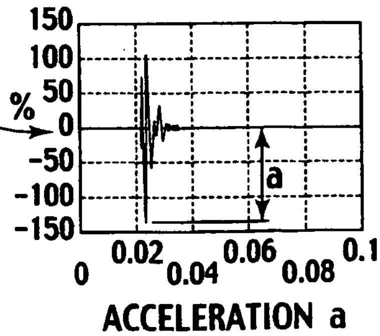


FIG.6C

FIG.7

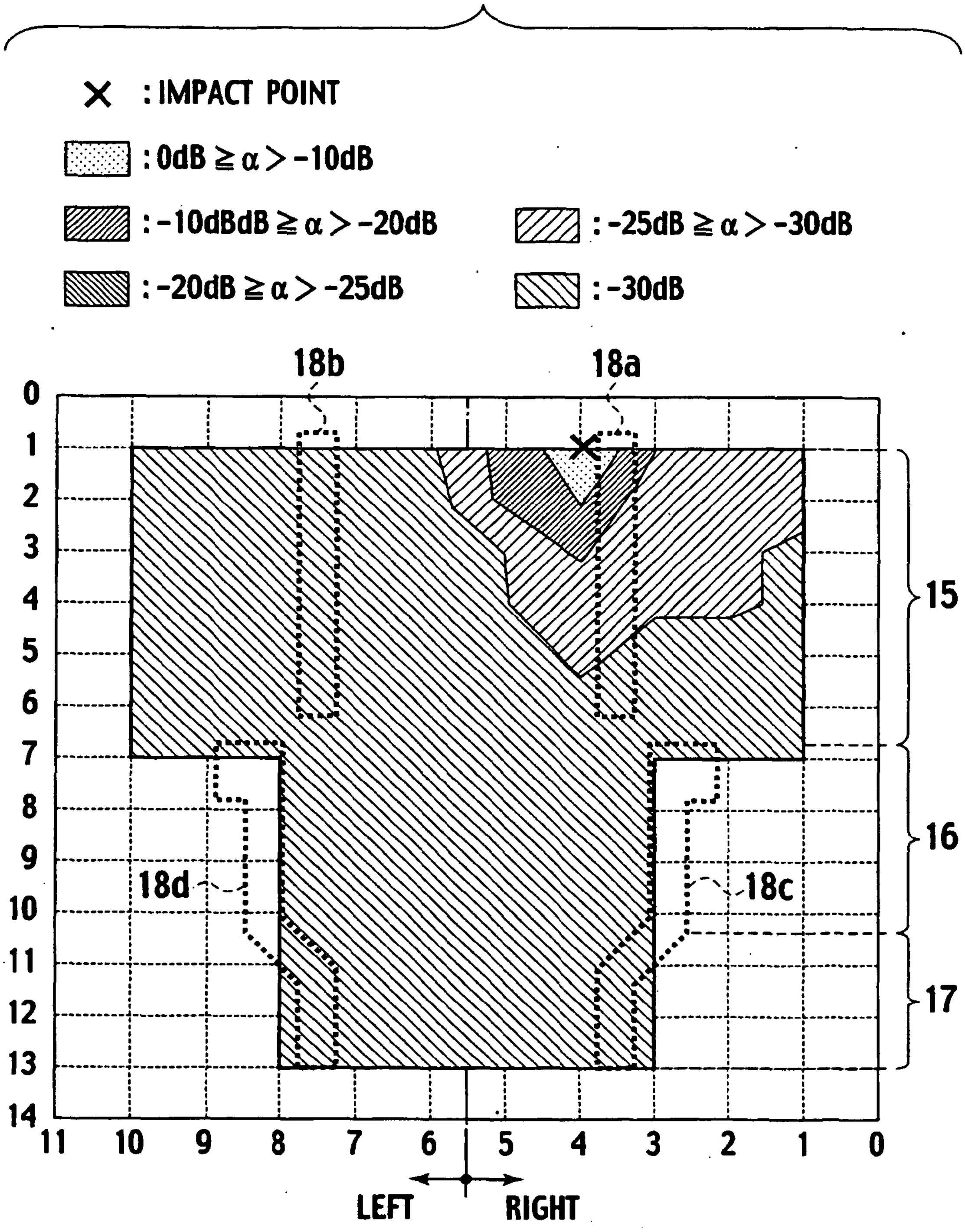
×  : IMPACT POINT
: 0dB ≧ α > -10dB
: -10dBdB ≧ α > -20dB
: -25dB ≧ α > -30dB
: -20dB ≧ α > -25dB
: -30dB
18b
18a
18d
18c
15
16
17
0 1 2 3 4 5 6 7 8 9 10 11 12 13 14
11 10 9 8 7 6 5 4 3 2 1 0
LEFT
RIGHT

FIG.8

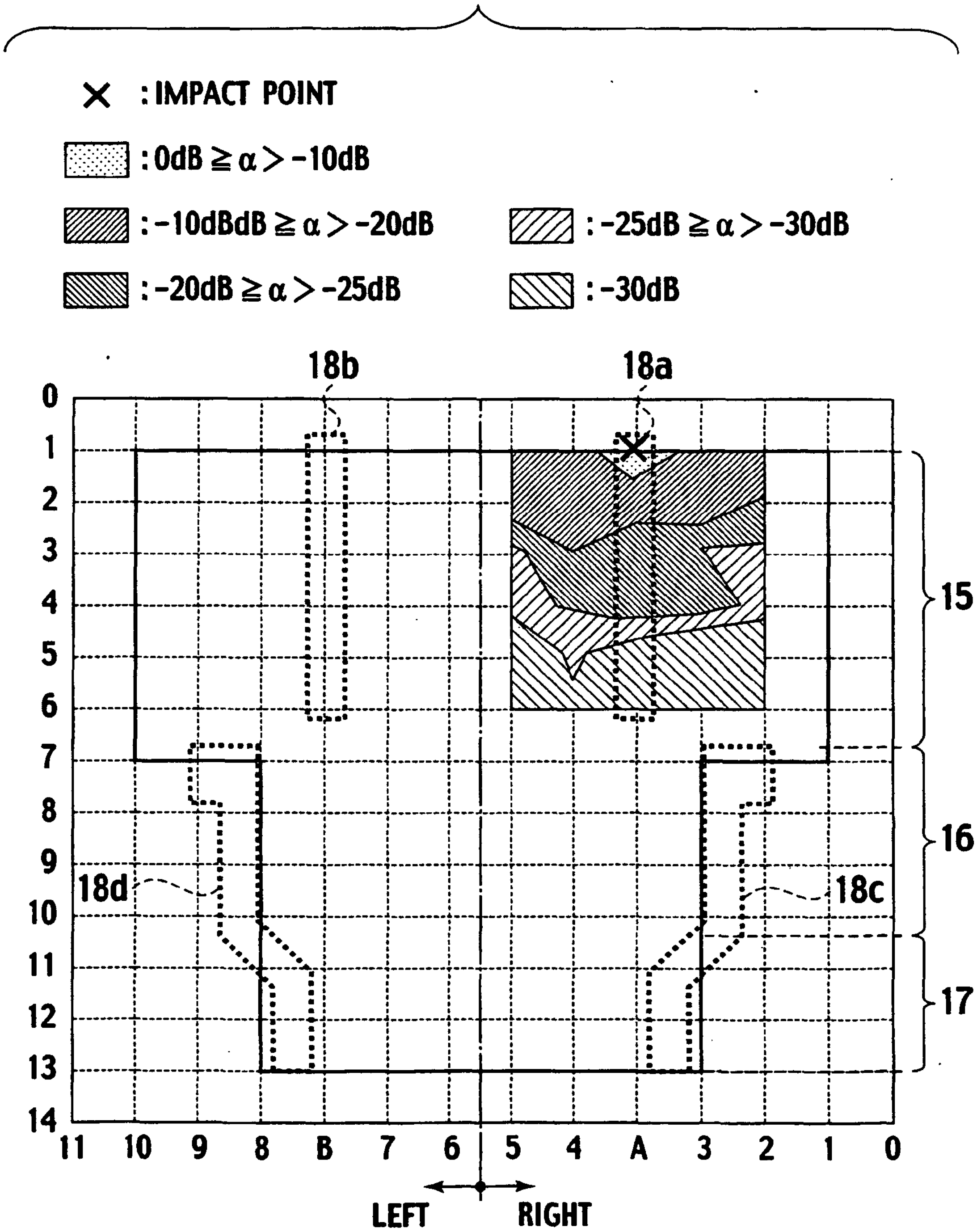
× : IMPACT POINT
: 0dB ≧ α > -10dB
: -10dBdB ≧ α > -20dB
: -25dB ≧ α > -30dB
: -20dB ≧ α > -25dB
: -30dB
18b
18a
18d
18c
15
16
17
0
1
2
3
4
5
6
7
8
9
10
11
12
13
14
11 10 9 8 B 7 6 5 4 A 3 2 1 0
LEFT
RIGHT

FIG.9

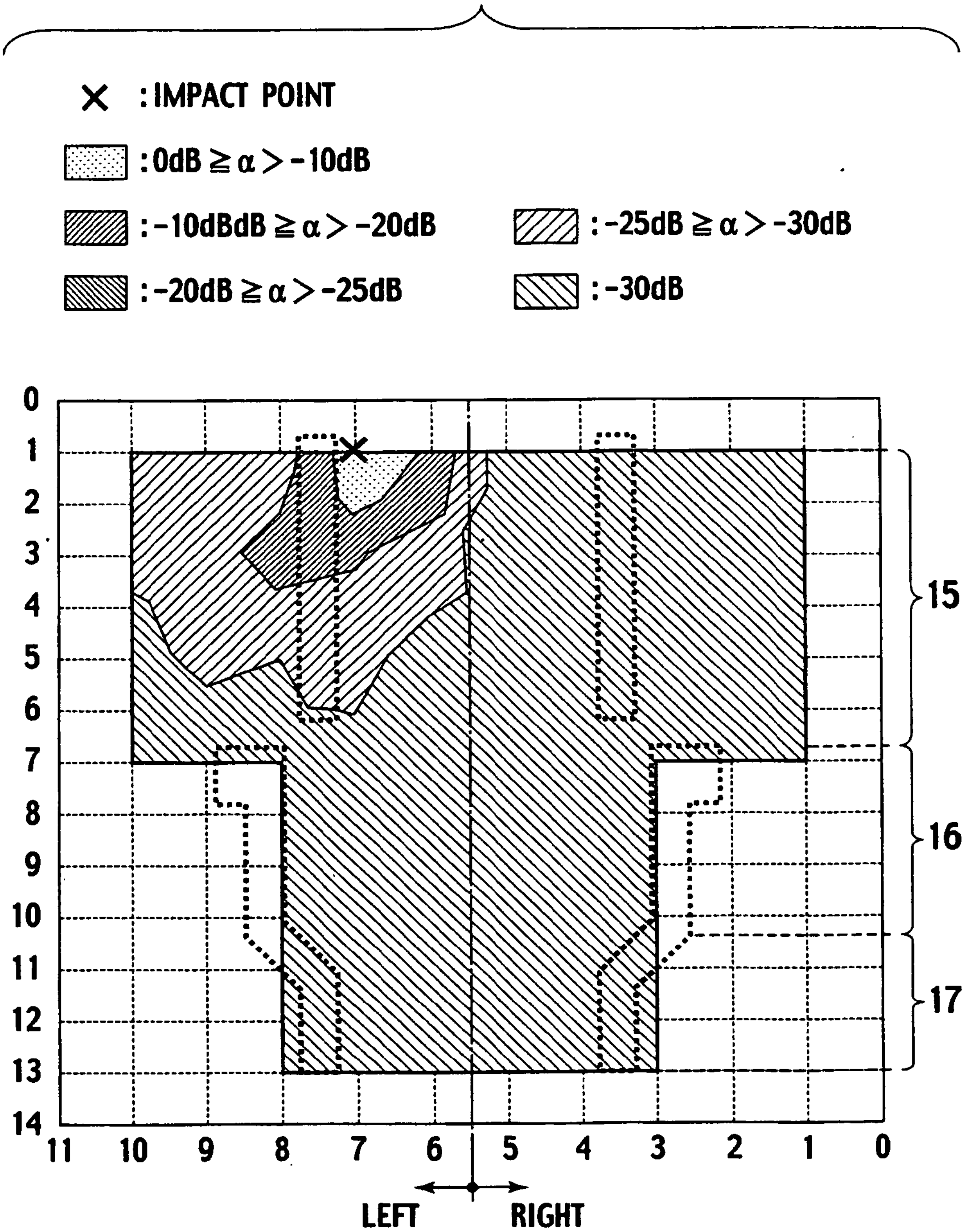
× : IMPACT POINT
: 0dB ≧ α > -10dB
: -10dBdB ≧ α > -20dB
: -25dB ≧ α > -30dB
: -20dB ≧ α > -25dB
: -30dB
0
1
2
3
4
5
6
7
8
9
10
11
12
13
14
11
10
9
8
7
6
5
4
3
2
1
0
LEFT
RIGHT
15
16
17

FIG.10

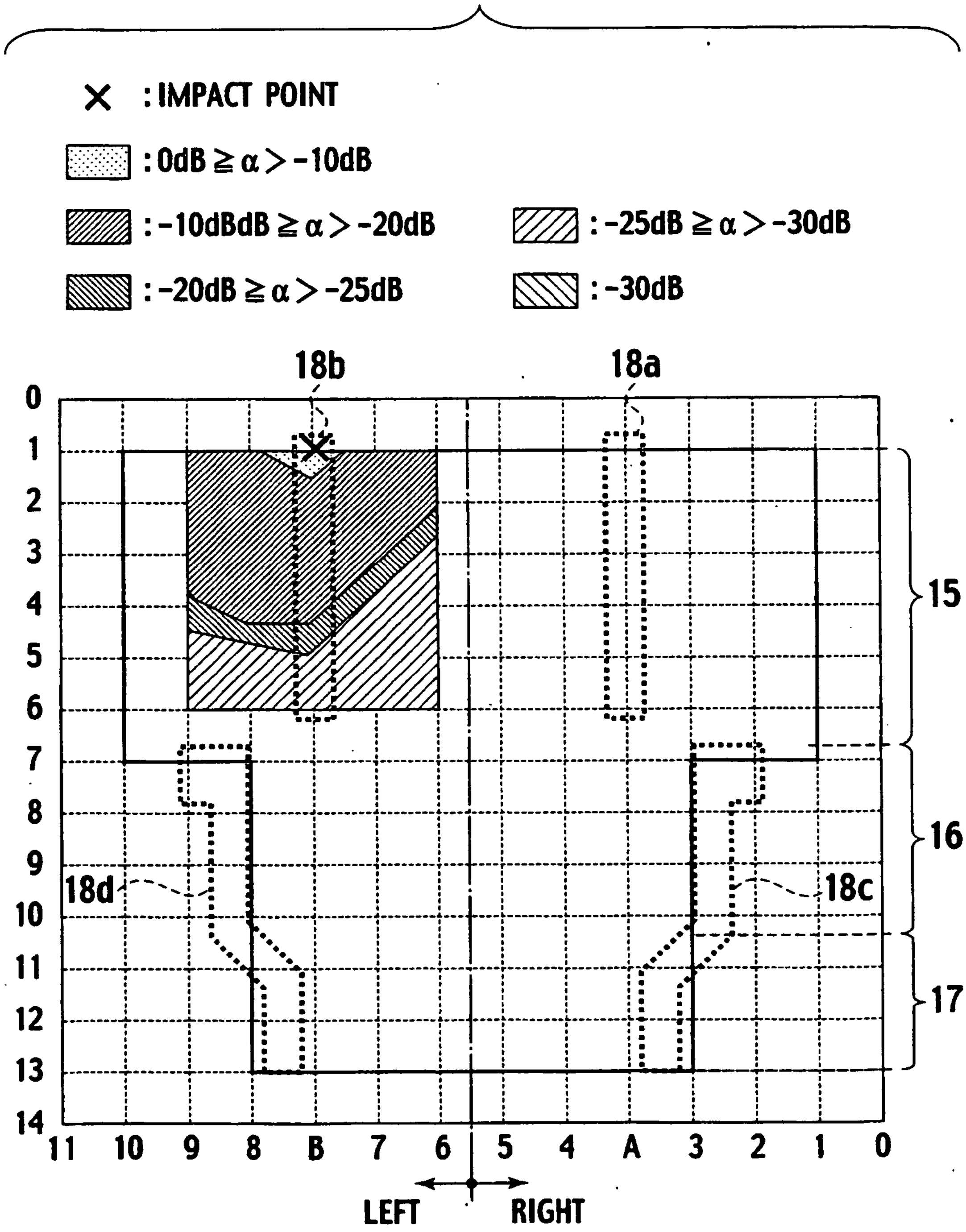
× : IMPACT POINT
: 0dB ≧ α > -10dB
: -10dBdB ≧ α > -20dB
: -25dB ≧ α > -30dB
: -20dB ≧ α > -25dB
: -30dB
18b
18a
15
16
17
18d
18c
0 1 2 3 4 5 6 7 8 9 10 11 12 13 14
11 10 9 8 B 7 6 5 4 A 3 2 1 0
LEFT
RIGHT

FIG.11

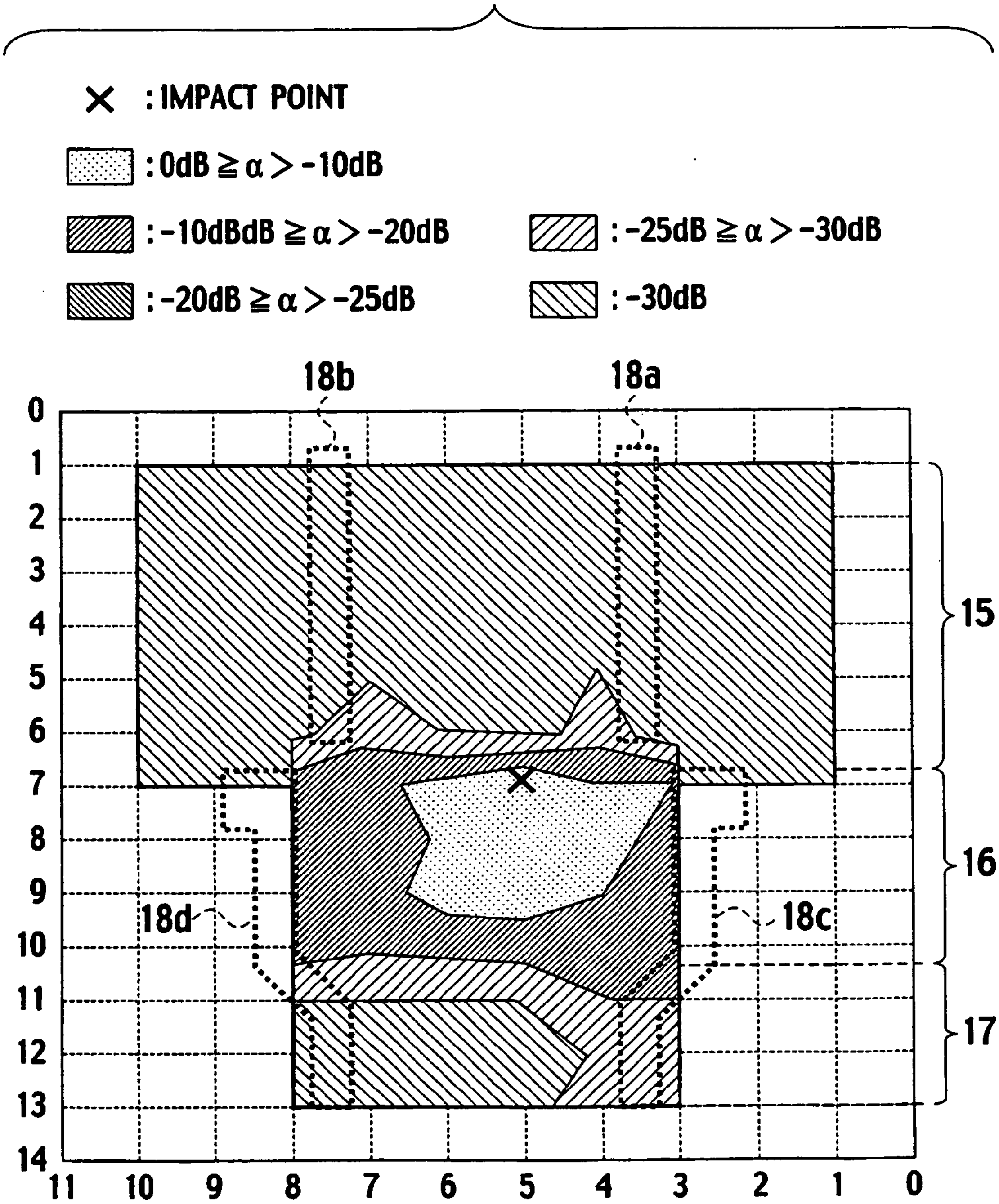
× : IMPACT POINT
: 0dB ≧ α > -10dB
: -10dBdB ≧ α > -20dB
: -25dB ≧ α > -30dB
: -20dB ≧ α > -25dB
: -30dB
18b
18a
18d
18c
15
16
17
0
1
2
3
4
5
6
7
8
9
10
11
12
13
14
11
10
9
8
7
6
5
4
3
2
1
0

FIG.12

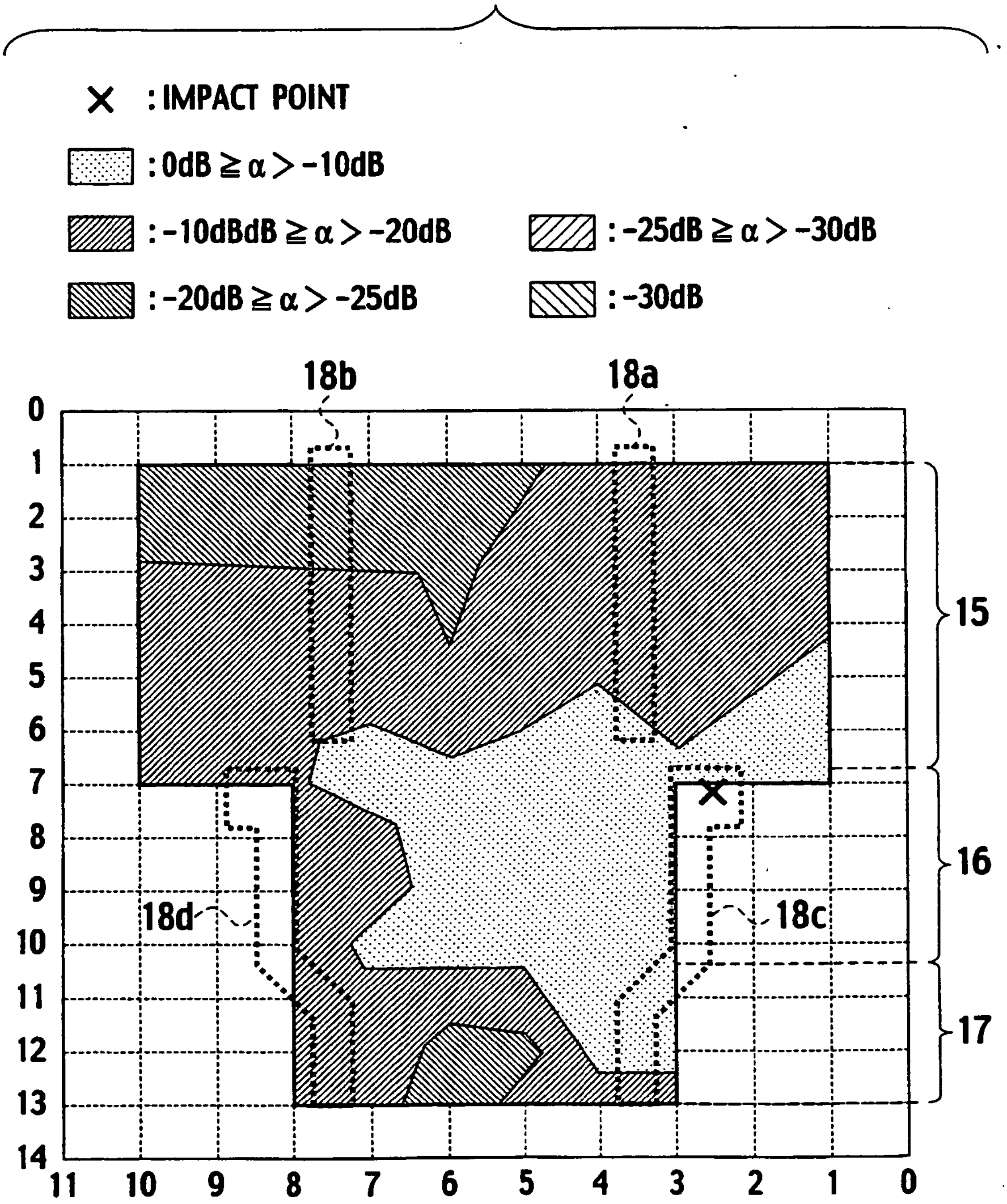
× : IMPACT POINT
: 0dB ≧ α > -10dB
: -10dBdB ≧ α > -20dB
: -25dB ≧ α > -30dB
: -20dB ≧ α > -25dB
: -30dB
18b
18a
18d
18c
15
16
17
0
1
2
3
4
5
6
7
8
9
10
11
12
13
14
11
10
9
8
7
6
5
4
3
2
1
0

FIG.13A

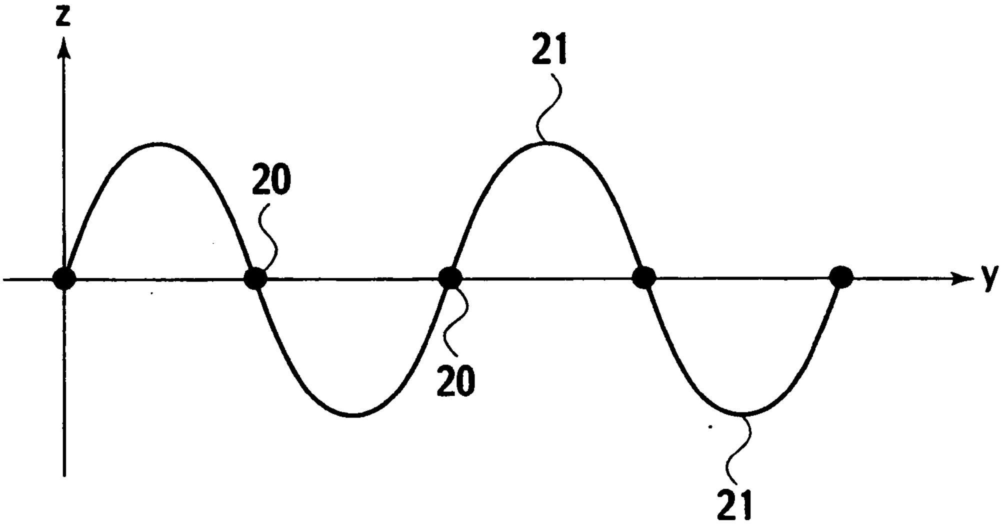


FIG.13B

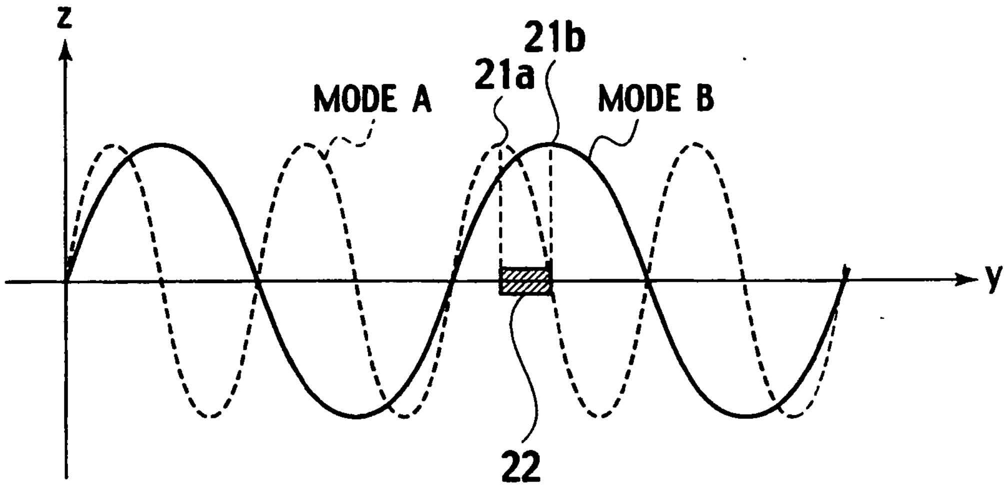

FIG.14A

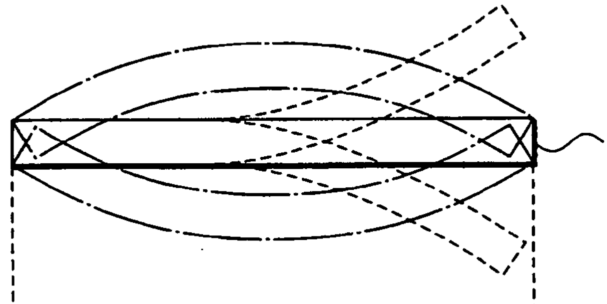


FIG.14B

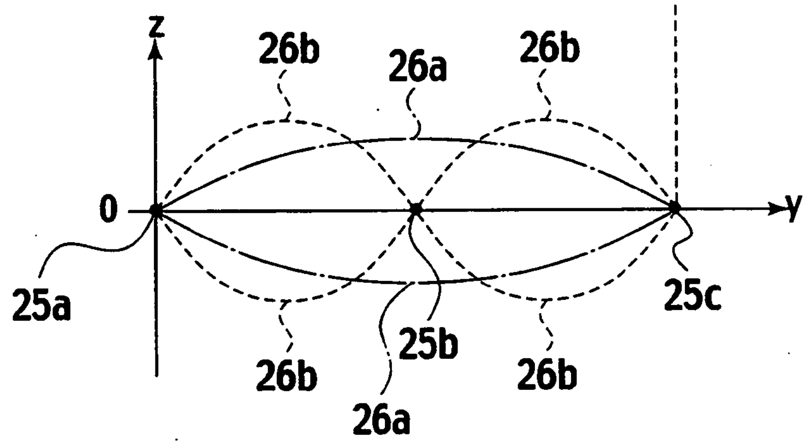


FIG.14C

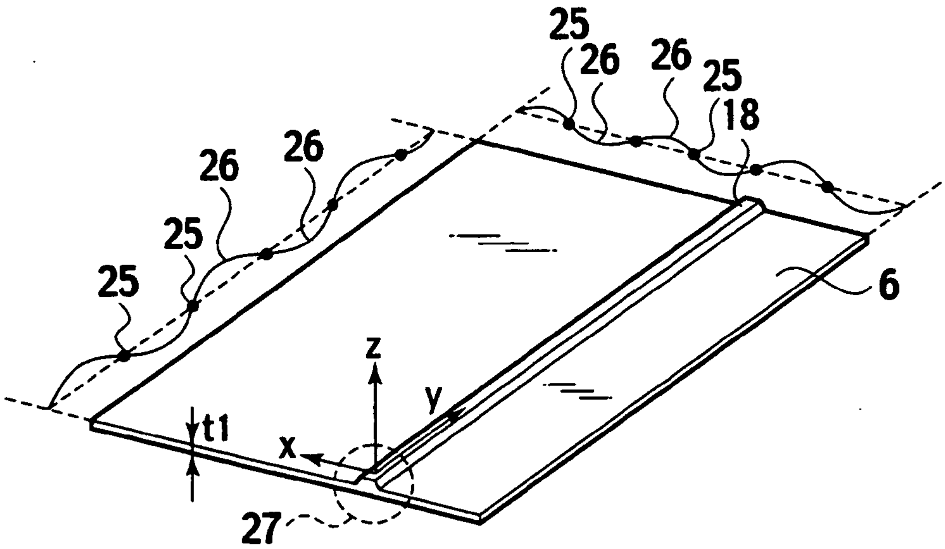


FIG.14D

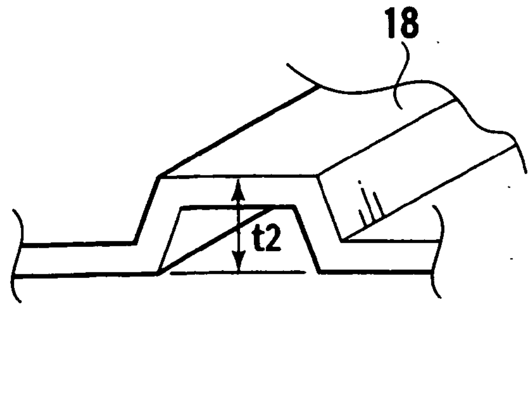

FIG.15

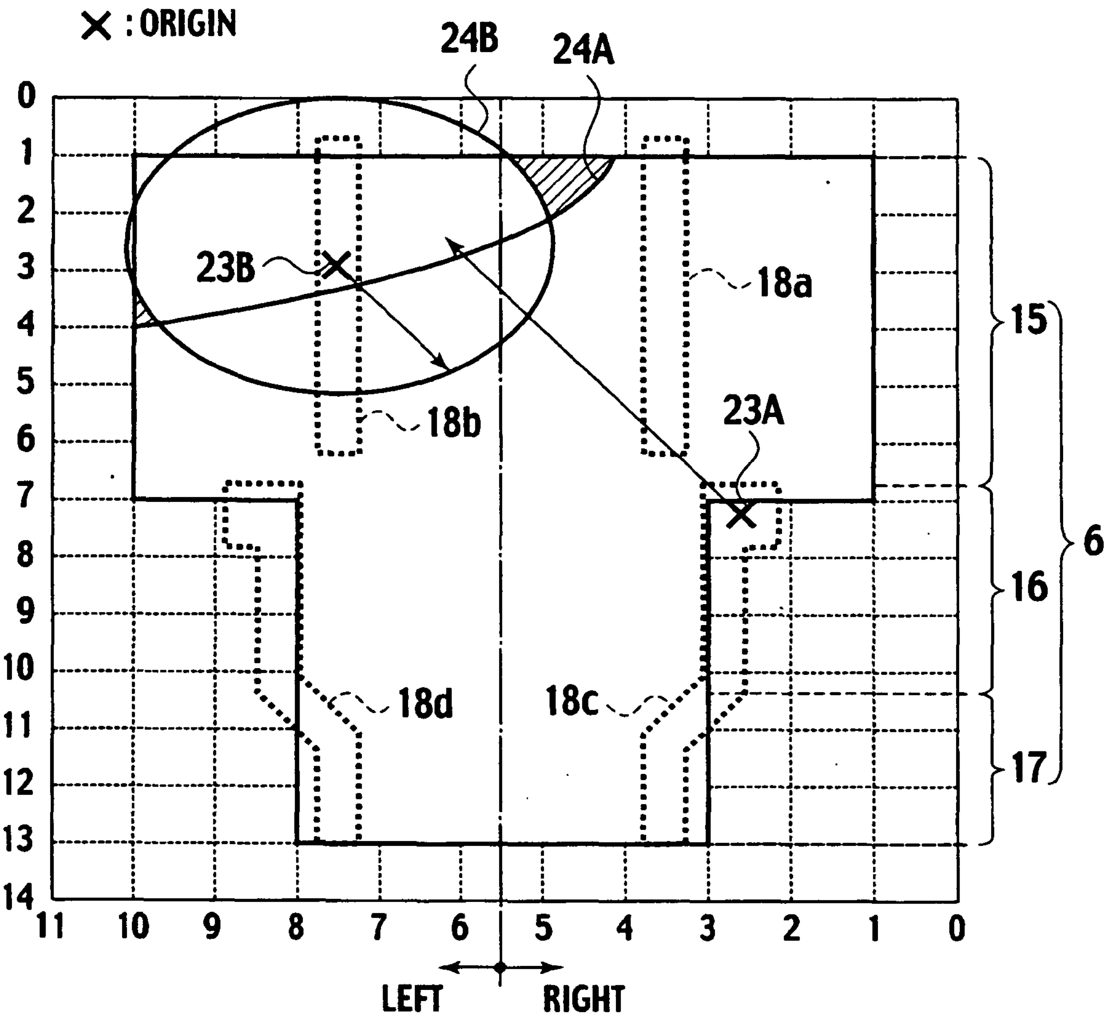

× : ORIGIN
24B
24A
23B
18a
18b
23A
15
16
17
6
18d
18c
0
1
2
3
4
5
6
7
8
9
10
11
12
13
14
11
10
9
8
7
6
5
4
3
2
1
0
LEFT
RIGHT


FIG.16

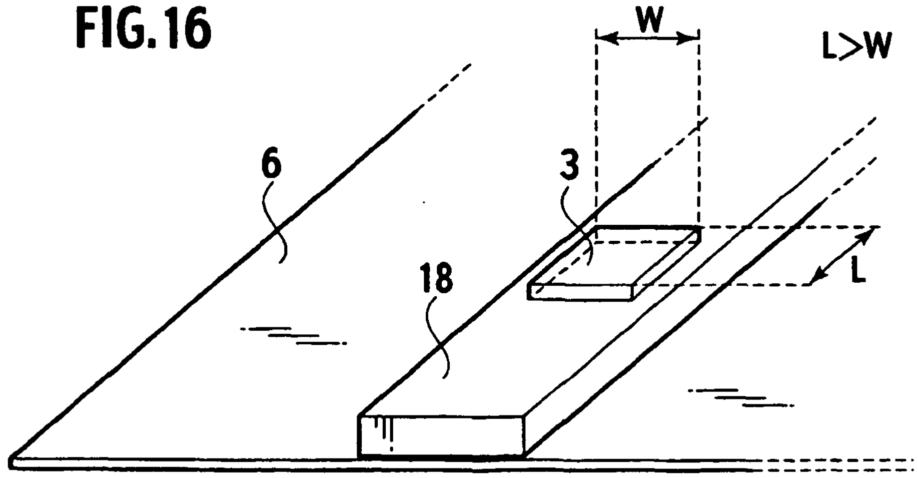

W
L>W
6
3
18
L

FIG.17

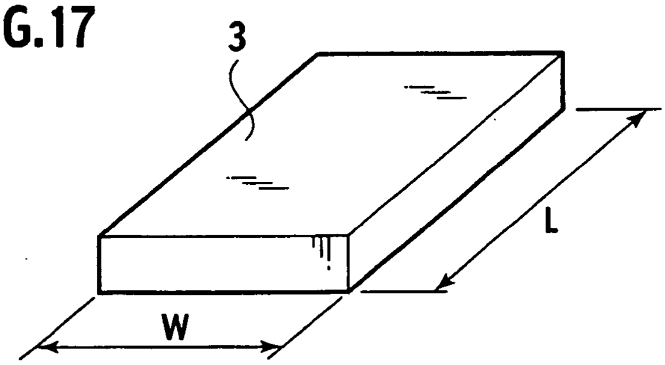


FIG.18A

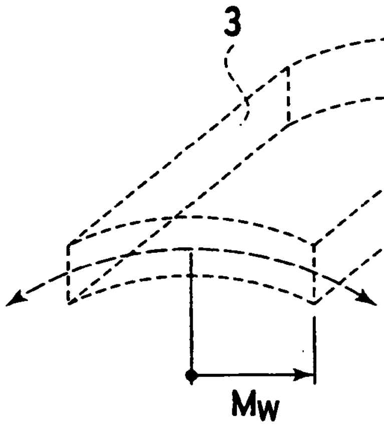


FIG.18B

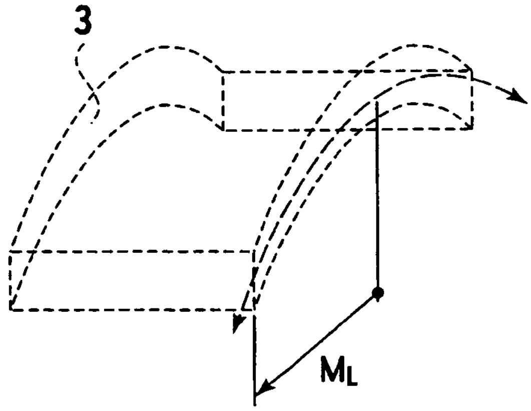

FIG.19A

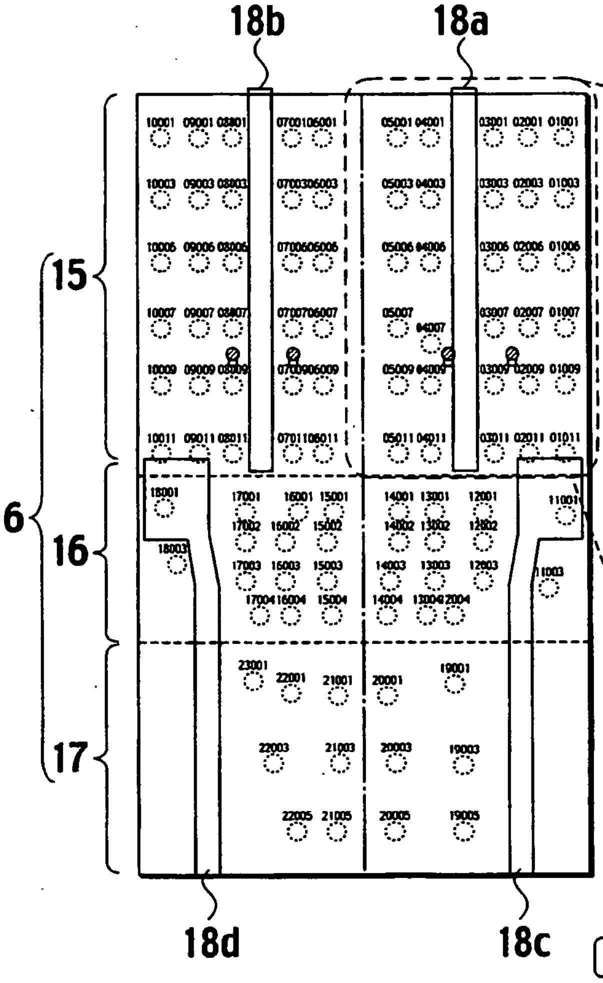


FIG.19B

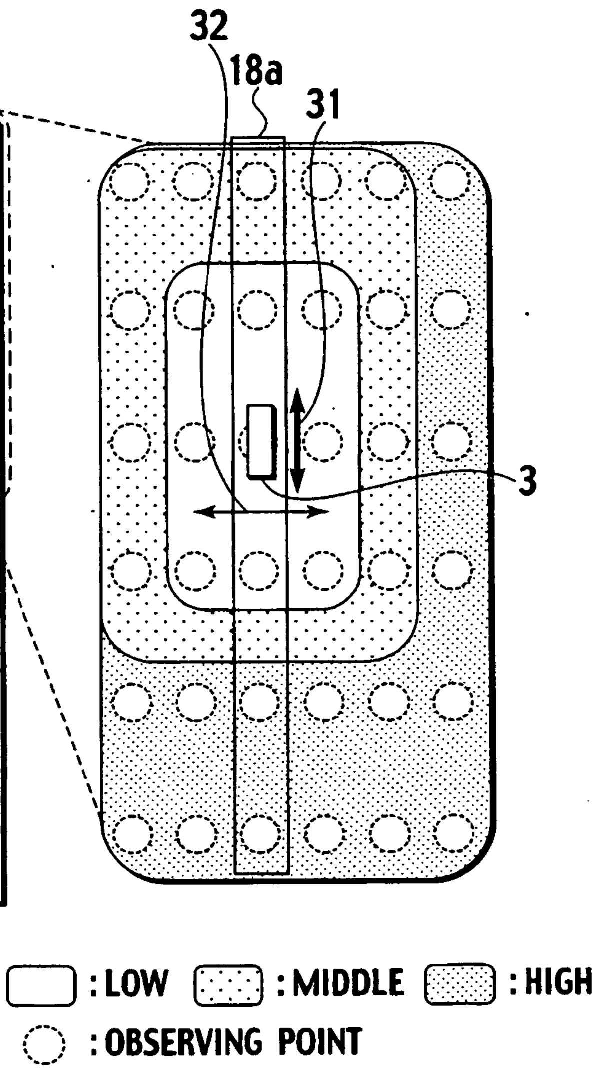

FIG.20A FIG.20B

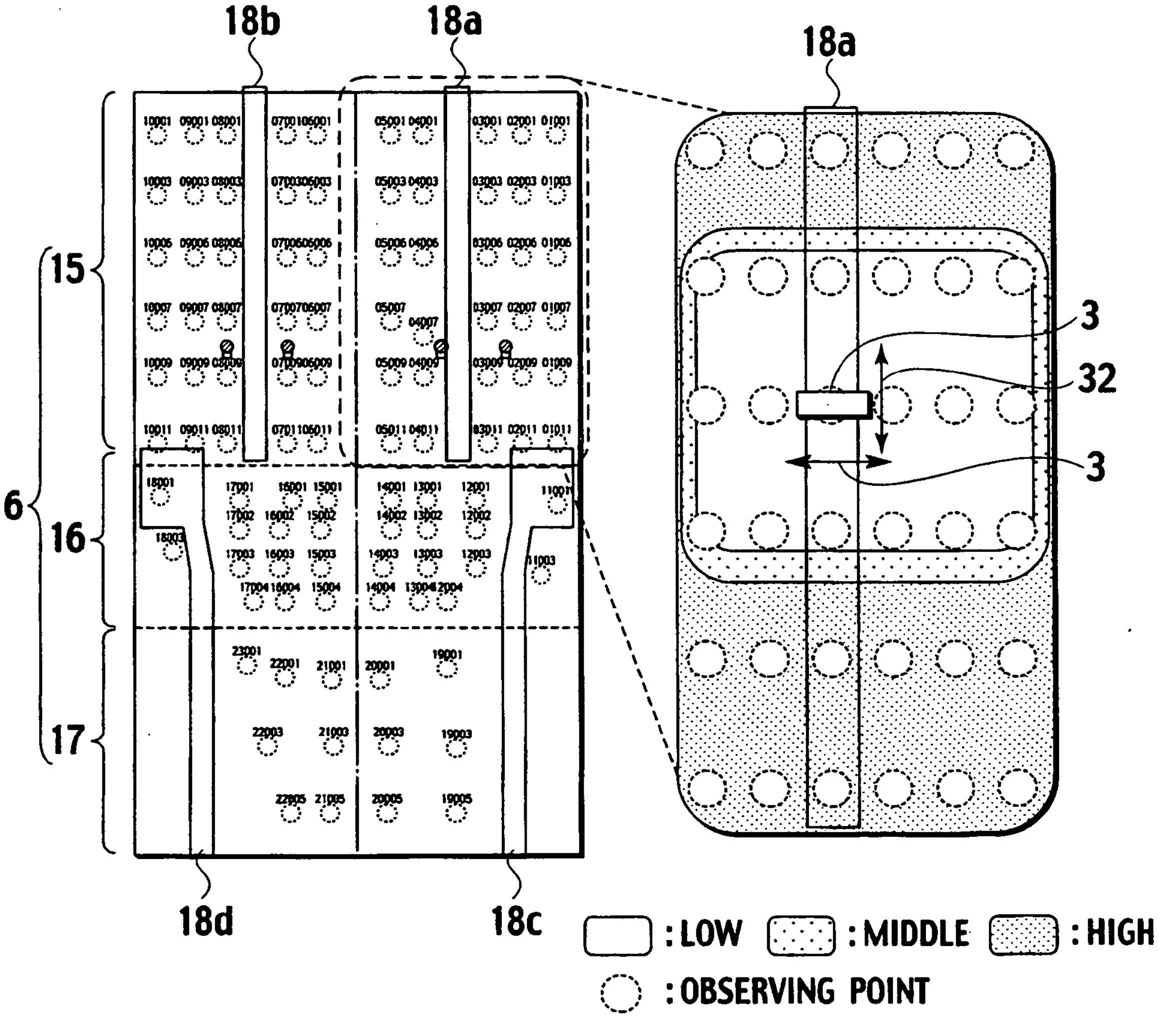

FIG.21

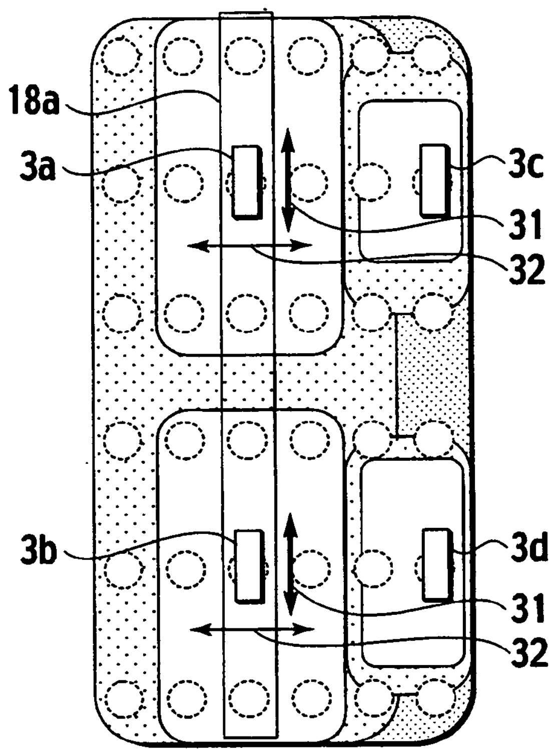


FIG.22

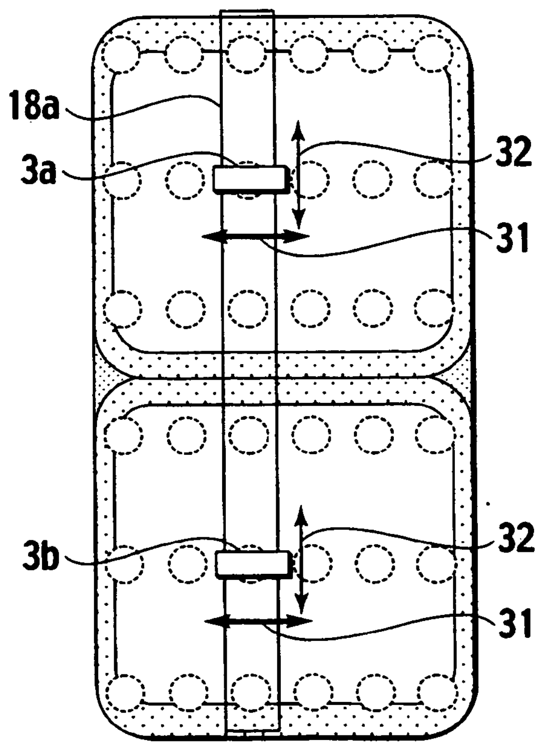

FIG.23A

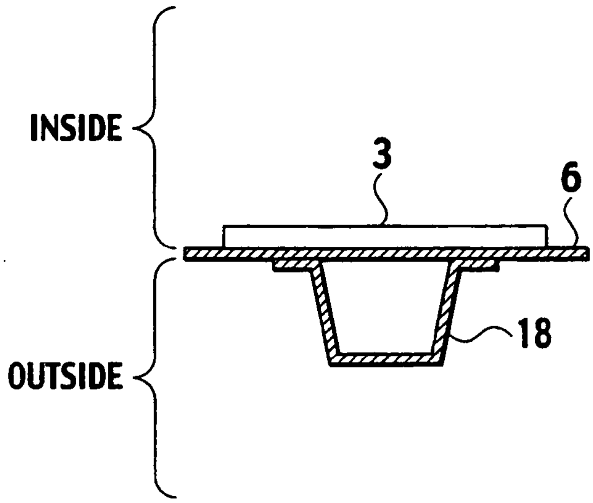


FIG.23B

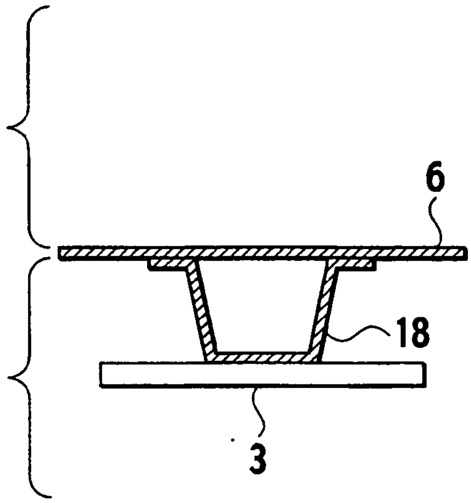


FIG.24A

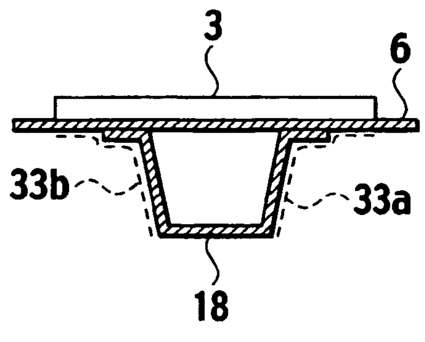


FIG.24B

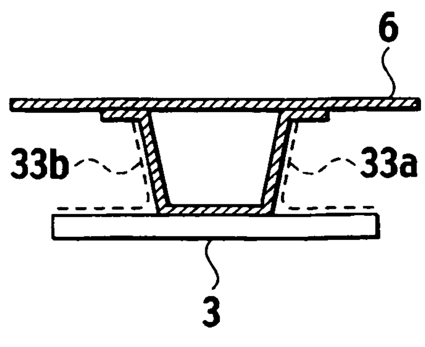

FIG.25

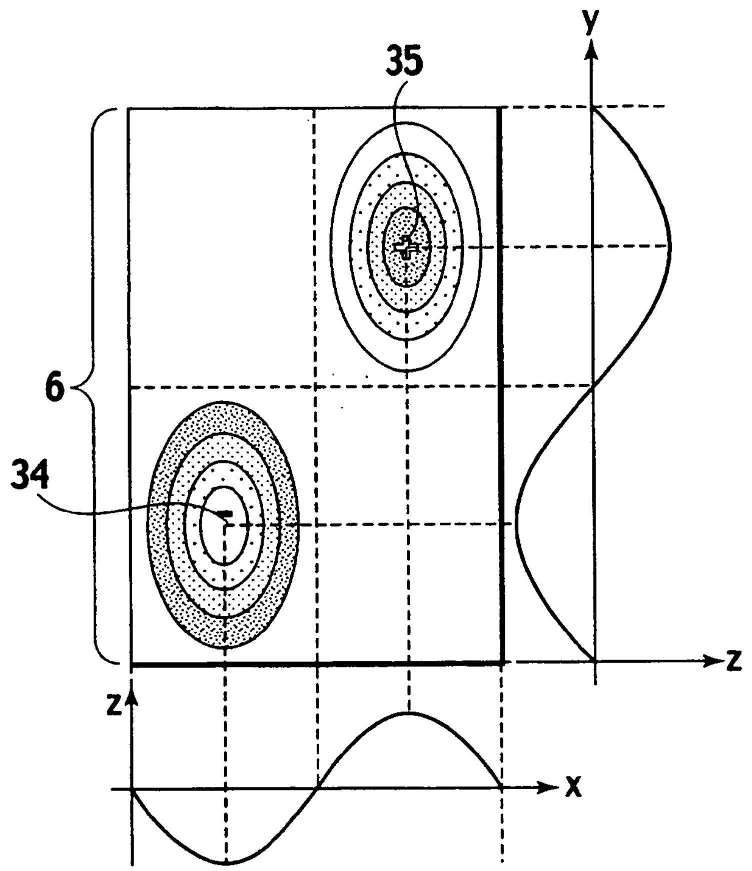


FIG.26

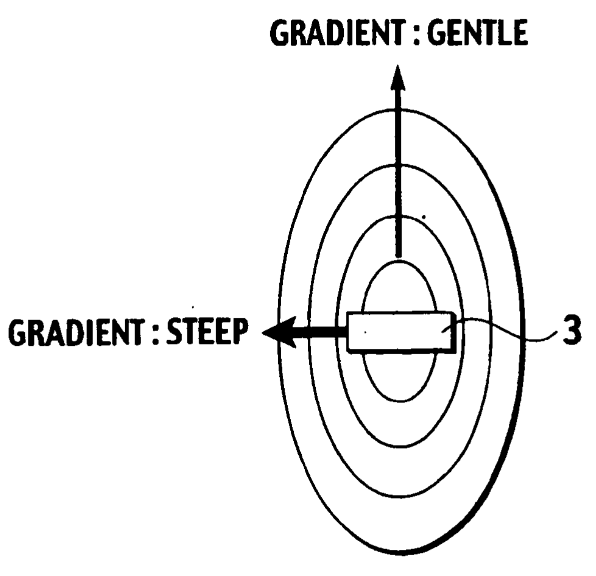

FIG.27

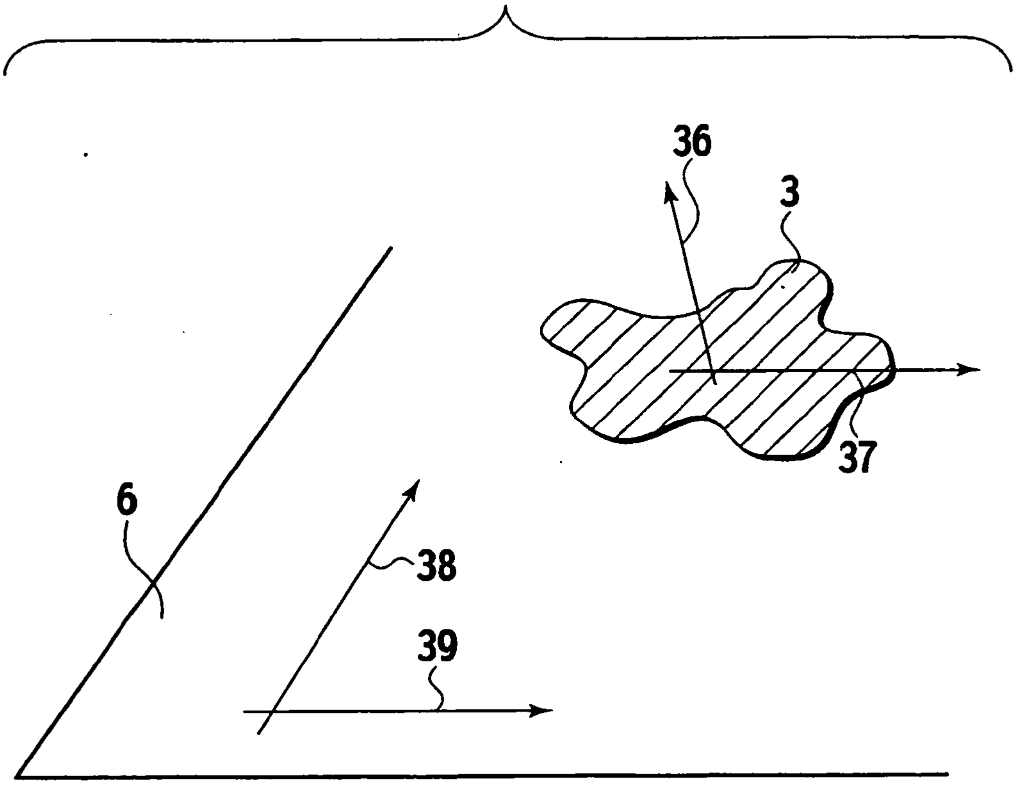

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6138996 A